# EUROPÄISCHE PATENTSCHRIFT

(11) **EP 3 655 880 B1**
(45) Veröffentlichungstag und Bekanntmachung des Hinweises auf die Patenterteilung: **01.09.2021**
(21) Anmeldenummer: 18756371.3
(22) Anmeldetag: 16.07.2018
(51) Int. Cl.: G06F 21/64, G06F 21/78

(54) **HARDWARESYSTEM MIT BLOCKCHAIN**
HARDWARE SYSTEM HAVING A BLOCK CHAIN
SYSTÈME MATÉRIEL À CHAÎNE DE BLOCS

(30) Priorität: 21.07.2017 DE 102017212618
(43) Veröffentlichungstag der Anmeldung: 27.05.2020
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE)
(74) Vertreter: Richardt Patentanwälte PartG mbB
(86) Internationale Anmeldenummer: PCT/EP2018/069275
(87) Internationale Veröffentlichungsnummer: WO 2019/016140

(56) Entgegenhaltungen:
- BOUDGUIGA AYMEN ET AL: "Towards Better Availability and Accountability for IoT Updates by Means of a Blockchain", 2017 IEEE EUROPEAN SYMPOSIUM ON SECURITY AND PRIVACY WORKSHOPS (EUROS&PW), IEEE, 26. April 2017 (2017-04-26), Seiten 50-58, XP033114038, DOI: 10.1109/EUROSPW.2017.50 [gefunden am 2017-06-30]
- ITTAI ABRAHAM ET AL: "Solidus: An Incentive-compatible Cryptocurrency Based on Permissionless Byzantine Consensus", ARXIV.ORG, CORNELL UNIVERSITY LIBRARY, 201 OLIN LIBRARY CORNELL UNIVERSITY ITHACA, NY 14853, 9. Dezember 2016 (2016-12-09), XP080738035,
- BESSANI ALYSSON ET AL: "State Machine Replication for the Masses with BFT-SMART", 2014 44TH ANNUAL IEEE/IFIP INTERNATIONAL CONFERENCE ON DEPENDABLE SYSTEMS AND NETWORKS, IEEE, 23. Juni 2014 (2014-06-23), Seiten 355-362, XP032647007, DOI: 10.1109/DSN.2014.43 [gefunden am 2014-09-18]

## Beschreibung

Die Erfindung betrifft ein Verfahren zum Steuern einer Systemkonfiguration eines Hardwaresystems sowie ein Hardwaresystem, welches durch das Verfahren steuerbar ist.

Soll eine Systemkonfiguration eines Hardwaresystems, welches eine Mehrzahl von einzelnen Hardwarekomponenten umfasst, die miteinander interagieren, geändert werden, so muss sichergestellt werden, dass die zu implementierende Änderung der Systemkonfiguration mit den vorhandenen Hardwarekomponenten und deren Konfigurationen kompatibel ist.

Die US 2004 / 0215948 A1 beschreibt eine Vorrichtung, ein Programmprodukt und ein Verfahren, welche einen nichtflüchtigen Festkörperspeicher verwenden, der so organisiert ist, dass variable Mengen von Konfigurationsdaten für einen logisch unterteilten Computer in einer effizienten, kompakten und kosteneffektiven Weise gespeichert werden. Ein nichtflüchtiger Festkörperspeicher ist in Blöcke fester Größe unterteilt, die miteinander zu Ketten verbunden sind zum Zweck des Speicherns variabler Mengen von Konfigurationsdaten für eine Mehrzahl logischer Einheiten, z. B. logische Partitionen, Hardwarevorrichtungen, Netzwerke und andere Ressourcen. Eine Kette von Blöcken fester Größe wird verwendet, um Konfigurationsdaten für einen gegebenen Typ logischer Entität zu pflegen, wobei jeder Block in einer Kette Konfigurationsdaten für eine bestimmte logische Entität des assoziierten Entitätstyps speichert. Die Blöcke fester Größe umfassen vollständige Blöcke und gemeinsam genutzte Blöcke, wobei vollständige Blöcke Daten für eine einzelne logische Einheit speichern und gemeinsam genutzte Blöcke Daten für mehrere logische Einheiten eines gemeinsamen Entitätstyps speichern.

Die US 2009 /0019275 A1 beschreibt ein Halbleiterspeichersystem, welches einen externen Speicher, einen internen Speicher und einen einmalig programmierbaren (OTP) Speicher enthält. Der externe Speicher enthält einen Kernel, einen öffentlichen Schlüssel, erste Startinformationen, die zum Authentifizieren des öffentlichen Schlüssels und zum Erzeugen eines geheimen Schlüssel zu Testzwecken verwendet werden, und einen zweiten Bootloader, der die Integrität des Kernels überprüft. Der interne Speicher enthält einen ersten Bootloader, der die Integrität des zweiten Bootloaders überprüft und den geheimen Schlüssel zu Testzwecken erzeugt. Der OTP-Speicher enthält zweite Startinformationen, die unter Verwendung des öffentlichen Schlüssels und eines geheimen Schlüssels erzeugt werden. Da das sichere Startverfahren und das dieses Verfahren verwendende Halbleiterspeichersystem im Gegensatz zu herkömmlicher Technologie keinen zusätzlichen OTP-Speicher zum Speichern eines geheimen Schlüssels benötigen, können Kapazität und Aufzeichnungszeit des OTP-Speichers im Vergleich zur herkömmlichen Technologie auf etwa die Hälfte reduziert werden.

Die US 8 356 091 B2 beschreibt ein Netzwerkelement, welches eine Steuerung zum Erhalten von Netzwerkinformationen aufweist, die einem Herstellen eines Netzwerks zwischen einer Gruppe von Kommunikationsgeräten zugeordnet sind, und zum Bereitstellen der Netzwerkinformationen für eine Vielzahl von Netzwerkeinrichtungsgeräten, die trennbar mit dem Netzwerkelement verbunden sind, wobei jedes der Netzwerkeinrichtungsgeräte mit einer Kommunikationsgeräte der Gruppe von Kommunikationsgeräten verbindbar ist, um zumindest einen Teil der Netzwerkinformationen an das Kommunikationsgerät, und wobei das Netzwerk zumindest teilweise basierend auf dem zumindest einen Teil der Netzwerkinformation eingerichtet wird.

Die US 5 717 849 A beschreibt ein softwaregesteuertes Datenverarbeitungssystem, welches Steuerblöcke verwendet, wobei jeder Steuerblock eine Datenstruktur enthält, die mindestens einen Steuerparameter für eine Datenverarbeitungsaktion definiert. Mehrere Steuerblöcke werden der Datenverarbeitungsaktion zugewiesen, um ihre Ausführung zu ermöglichen, und jeder der mehreren Steuerblöcke hat einen Markierungswert, der für jeden Satz von verketteten Steuerblöcken, die der Datenverarbeitungsaktion zugeordnet sind, einen identischen Wert aufweist. Das Datenverarbeitungsverfahren umfasst die folgenden Schritte: Ausführen der Datenverarbeitungsaktion durch Zugreifen auf jeden der mehreren zugewiesenen Steuerblöcke der Reihe nach; Vergleichen von Markierungswerten, die in sequentiell zugegriffenen Steuerblöcken enthalten sind, um zu bestimmen, ob die Markierungswerte identisch sind, und falls ja, Fortsetzen der Ausführung der Datenverarbeitungsaktion und, falls nicht, Melden einer Anomalie.

Die US 2001 / 0018736 A1 beschreibt einen manipulationssicheren Mikroprozessor, welcher in einer Multi-Task-Umgebung eine Kontextinformation für ein Programm speichert, dessen Ausführung unterbrochen werden soll, wobei die Kontextinformation Informationen enthält, die einen Ausführungszustand dieses einen Programms und den Ausführungscode-Verschlüsselungsschlüssel dieses einen Programms anzeigen. Eine Ausführung dieses einen Programms kann neu gestartet werden, indem der Ausführungszustand dieses einen Programms aus den gespeicherten Kontextinformationen wiederhergestellt wird. Die Kontextinformationen können unter Verwendung des öffentlichen Schlüssels des Mikroprozessors verschlüsselt und dann unter Verwendung des geheimen Schlüssels des Mikroprozessors entschlüsselt werden.

Der Artikel "Towards Better Availability and Accountability for IoT Updates by Means of a Blockchain" von Aymen Boudguiga et al., 2017 IEEE European Symposium on Security and Privacy Workshops (EUROS&PW), 26. April 2017, Seiten 50-58 beschreibt eine Verwendung einer Blockchain-Infrastruktur zum Implementieren Vertraulichkeit, Integrität und Verfügbarkeit im Internet der Dinge, wobei der Schwerpunkt auf der Verfügbarkeit liegt. Es wird einen Peer-to-Peer-Mechanismus vorgeschlagen, um Updates zischen Objekten zu verteilen, die nur eingeschränkten Zugang zum Internet haben.

Der Artikel "Solidus: An Incentive-compatible Cryptocurrency Based on Permissionless Byzantine Consensus" von Ittai Abraham et al., arXiv:1612.02916v1, arXiv.org, 9. Dezember 2016, beschreibt Solidus, eine dezentrale Kryptowährung, welche auf einem genehmigungsfreien byzantinischen Konsens basiert. Solidus verwendet einen Proof-of-Work für eine Führerwahl, um das PBFT-Protokoll (Practical Byzantine Fault Tolerance) an einen genehmigungsfreien Ansatz anzupassen.

Der Artikel "State Machine Replication for the Masses with BFT-SMART" von Alysson Bessani et al., 2014 44TH Annual IEEE/IFIP International Conference on Dependable Systems and Networks, 23. Juni 2014, Seiten 355-362 beschreibt BFT-SMART, eine Open-Source-Java-basierte Bibliothek, die eine robuste byzantinische fehlertolerante (BFT/Byzantine fault-tolerant) Zustandsmaschienenreplikation Machine Replication (SMR/State machine replication) implementiert.

Der Erfindung liegt daher die Aufgabe zugrunde, ein Verfahren zum Steuern einer Systemkonfiguration eines Hardwaresystems zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Steuern einer Systemkonfiguration eines Hardwaresystems unter Verwendung einer dem Hardwaresystem zugeordneten Blockchain. Die Blockchain umfasst Einträge mit Konfigurationsdaten des Hardwaresystems. Das Hardwaresystem umfasst eine Mehrzahl von Hardwarekomponenten, wobei jede der Hardwarekomponenten zumindest einen Prozessor, einen Speicher mit Konfigurationsdaten der jeweiligen Hardwarekomponente und eine Kommunikationsschnittstelle zum Kommunizieren mit ein oder mehreren der Hardwarekomponenten des Hardwaresystems umfasst.

Das Verfahren umfasst:
- Erstellen und Senden einer ersten Änderungsanfrage zu einer ersten Änderung der Systemkonfiguration des Hardwaresystems durch eine erste Hardwarekomponente der Mehrzahl von Hardwarekomponenten,
- Empfangen der ersten Änderungsanfrage durch die weiteren Hardwarekomponenten der Mehrzahl von Hardwarekomponenten,
- Prüfen der ersten Änderungsanfrage durch die weiteren Hardwarekomponenten auf ihre Kompatibilität mit der Konfiguration der jeweiligen empfangenden Hardwarekomponente unter Verwendung der Konfigurationsdaten der empfangenden Hardwarekomponente,
- im Falle, dass die angefragte erste Änderung der Systemkonfiguration kompatible mit der Konfiguration der empfangenden Hardwarekomponente ist, Erzeugen und Senden einer Zustimmung zu der ersten Änderung der Systemkonfiguration durch die empfangende Hardwarekomponente, und
im Falle, dass ein für einen Konsens notwendiges Zustimmungsquorum der Hardwarekomponenten der Mehrzahl von Hardwarekomponenten erreicht wird:
- Eintragen der angefragten ersten Änderung der Systemkonfiguration des Hardwaresystems in die Blockchain,
- Implementieren der angefragten ersten Änderung der Systemkonfiguration in dem Hardwaresystem.

Unter einem Hardwaresystem wird hier eine Anordnung verstanden, welche eine Mehrzahl von Hardwarekomponenten umfasst, wobei jede der Hardwarekomponenten einen Prozessor und einen Speicher mit Konfigurationsdaten aufweist. Die Hardwarekomponente kann ferner Programminstruktionen in Form von Software, Firmware und/oder Hardware umfassen, welche beispielsweise dazu konfiguriert ist von dem Prozessor der Hardwarekomponente ausgeführt zu werden. Nach Ausführungsformen umfasst beispielsweise der Speicher entsprechende Programminstruktionen. Ferner umfassen die Hardwarekomponenten jeweils Kommunikationsschnittstelle und stehen über diese Kommunikationsschnittstelle in Kommunikationsverbindung miteinander. Dabei können die Kommunikationsverbindungen ein Kommunikationsnetzwerk ausbilden mit den Hardwarekomponenten als Netzwerkknoten. Die Kommunikation zwischen den Hardwarekomponenten kann nach Ausführungsformen kryptographisch gesichert erfolgen. Beispielsweise kann die Kommunikation verschlüsselt sein, etwa mittels eines asymmetrischen, symmetrischen oder hybrides Verschlüsselungsverfahren. Beispielsweise kann die Kommunikation über ein mittels Ende-zu-Ende-Verschlüsselung gesicherte Kommunikationsverbindung erfolgen. Ferner können die Kommunikation oder zumindest Teile davon von dem jeweiligen Absender signiert sein, um die Authentizität der Mitteilung zu belegen. Hierzu kann beispielsweise ein MAC-Algorithmus verwendet werden.

Unter einer Konfiguration einer Hardwarekomponente wird hier die Gesamtheit der software-, firmware- und/oder hardwarebasierten Merkmale, Grundeinstellungen und/oder Anpassungen der entsprechenden Hardwarekomponente verstanden. Die Konfiguration einer Hardwarekomponente umfasst insbesondere Anpassungen von Programmen oder Hardwarebestandteilen der entsprechenden Hardwarekomponente an das Hardwaresystem, d.h. an die weiteren von dem System umfassten Hardwarekomponenten sowie die Interaktion mit diesen bei einer Ausführung bestimmungsgemäßer Funktionen durch die entsprechende Hardwarekomponente. Neben der Installation, d.h. den Ersteinstellungen, kann die Konfiguration weitere wählbaren Voreinstellungen bzw. Defaulteinstellungen der Betriebsparameter der Hardwarekomponente umfassen.

Unter einer Hardware-Konfiguration werden hardwarebasierte Merkmale der Hardwarekomponente verstanden, d.h. eine bestimmte Zusammenstellung von Hardwarebestandteilen, wie etwa Prozessor und/oder Speicher, welche die entsprechende Hardwarekomponente umfasst. So umfasst eine Hardware-Konfiguration z. B. einen Prozessortyp, einen Speichertyp und/oder Schnittstellendefinitionen.

Softwareseitig kann eine entsprechende Hardwarekomponente beispielsweise so konfigurieren werden, dass sie mit ein oder mehreren weiteren Hardwarekomponenten des Hardwaresystems kommuniziert und/oder interagiert, indem ein oder mehrere Treiber für die weiteren Hardwarekomponenten installiert werden. Treiber bezeichnen hier Programminstruktionen, welche die Kommunikation und/oder die Interaktion anderen Hardwarekomponenten des Hardwaresystems steuern. Nach Ausführungsformen kommuniziert der Treiber einerseits direkt mit einer oder mehreren der anderen Hardwarekomponenten und tauscht Steuersignale und/oder Daten mit diesen aus. Die Kommunikation erfolgt über eine Schnittstelle, wie etwa ein Kommunikationsbus, d.h. eine Hardware-Schnittstelle, oder ein Basis-Kommunikationssystem eines Betriebssystems der Hardwarekomponente, welche den Treiber umfasst. Andererseits bietet der Treiber einem Betriebssystem und/oder Anwendungssoftware der entsprechenden Hardwarekomponente eine festgelegte Schnittstelle. Insbesondere kann ein Treiber eine genormte Kommunikationsweise mit verschiedenartigen Hardwarekomponenten ermöglichen.

Die Konfigurationen der Hardwarekomponenten umfassen ferner beispielsweise softwarebasierte Konfigurationen. Diese Konfigurationen umfassen beispielsweise Grundkonfigurationen, d.h. Defaulteinstellungen bzw. Voreinstellungen, welche die Grundlage für den allgemeinen Betrieb der entsprechenden Hardwarekomponenten bilden. Ferner kann eine Konfiguration Anpassungen umfassen, welche dazu beitragen die entsprechende Hardwarekomponente beispielsweise an das Hardwaresystem und insbesondere an die Interaktion mit den weiteren Hardwarekomponenten des Systems anzupassen. Dabei können die Grundeinstellungen beispielsweise als Fail-Safe-Konfigurationen dienen.

Die Konfigurationsdaten einer Hardwarekomponente sind beispielsweise in einer Konfigurationsdatei derselben gespeichert, welche bestimmte software-, firmware- und/oder hardwarebasierte Einstellungen der Hardwarekomponente umfasst.

Die Systemkonfiguration umfasst beispielsweise alle software-, firmware- und/oder hardwarebasierten Einstellungen des Hardwaresystems. Die Systemkonfiguration ist in einer Konfigurationsdatei in Form einer Blockchain bzw. mit einer Blockchain-Struktur gespeichert. Diese Konfigurationsdatei ist dazu konfiguriert, nicht nur die aktuelle Systemkonfiguration zu speichern, sondern alle Änderungen der Systemkonfiguration zu protokollieren. Die entsprechende Blockchain ist beispielsweise in den Speichern einer Mehrzahl und/oder aller Hardwarekomponenten des Hardwaresystems gespeichert.

Insbesondere kann die Systemkonfiguration Informationen dazu umfassen, welche Hardwarekomponenten das System umfasst, welche Funktionen die einzelnen Hardwarekomponenten umfassen bzw. für andere Hardwarekomponenten bereitstellen und wie die Hardwarekomponenten des Systems miteinander kommunizieren bzw. interagieren. Beispielsweise umfasst die Systemkonfiguration die Konfigurationen aller Hardwarekomponenten, welche das Hardwaresystem umfasst. Beispielsweise umfasst die Systemkonfiguration für jede der Hardwarekomponenten alle Einstellungen bzw. Merkmale der entsprechenden Hardwarekomponente, welche für die Funktionsfähigkeit oder für zumindest eine Funktion zumindest einer weiteren Hardwarekomponente des Systems relevant und/oder notwendig sind.

Soll die Systemkonfiguration des Hardwaresystems geändert werden, beispielswese soll ein neuer Dienst, welchen zumindest eine der Hardwarekomponenten anbieten möchte, implementiert werden, wird eine entsprechende Anfrage von der Komponente, welche den Dienst anbieten möchte, erzeugt und den anderen Komponenten zur Abstimmung vorgelegt. Dies kann direkt durch die anfragende Komponente oder sukzessive durch weiterleiten der Anfrage zwischen den Komponenten, etwa im Falle eines Peer-to-Peer-Netzwerks, erfolgen.

Eine entsprechende Änderung kann beispielsweise ein Hinzufügen einer zusätzlichen Hardwarekomponente, wie etwa einem Router, zu dem Hardwaresystem umfassen. Ferner kann eine entsprechende Änderung eine Umstellung eines Kommunikationsprotokolls oder einer Sprache, wie etwa einer Auszeichnungssprache. Eine Auszeichnungssprache bezieht sich hier auf eine maschinenlesbare Sprache zum Gliedern und Formatieren von Texten sowie anderen Daten, wie etwa die Hypertext Markup Language (HTML). Beispielsweise kann eine entsprechende Änderung eine Umstellung von HTML4 auf HTML5 umfassen. Ferner kann eine entsprechende Änderung einen zusätzlichen Dienst umfassen, welchen eine zusätzliche Hardwarekomponente bereitstellt.

Die Komponenten, welche die Anfrage empfangen, prüfen den Inhalt der Anfrage, d.h. den neuen Dienst, jeweils auf dessen Kompatibilität mit ihrer jeweiligen eigenen Konfiguration. Komponenten, deren Konfiguration kompatibel mit der vorgeschlagenen Systemkonfigurationsänderung ist, stimmen der Implementierung zu, nicht kompatible Komponenten lehnen diese ab. Nach Ausführungsformen erfolgt die die Ablehnung explizit durch senden einer Ablehnungsmitteilung. Nach weiteren Ausführungsformen erfolgt die Ablehnung implizit, indem die ablehnende Hardwarekomponente auf die Anfrage nicht antwortet. Wird insgesamt ein Konsens zwischen den Komponenten des Hardwaresystems oder zumindest zwischen den Komponenten einer stimmberechtigten Mehrzahl von Komponenten gefunden, dass der neue Dienst zumindest ausreichend kompatibel ist, wird ein entsprechender Eintrag in der Blockchain erzeugt und der Dienst implementiert.

Eine vorgeschlagenen bzw. angefragte Änderung der Systemkonfiguration ist mit der Konfiguration einer prüfenden Hardwarekomponente beispielsweise kompatibel, wenn durch die Änderung der Systemkonfiguration die Funktionsfähigkeit bzw. der Funktionsumfang der prüfenden Hardwarekomponente nicht nachteilig beeinflusst und/oder reduziert wird. Dies kann etwa der Fall sein, wenn ein bestehender Dienst durch einen verbesserten Dienst geupdated werden soll. Ist die prüfende Hardwarekomponente nicht dazu konfiguriert den bestehenden Dienst zu nutzen, so beeinflusst das Update auf den verbesserten Dienst weder die Funktionsfähigkeit noch den Funktionsumfang der prüfenden Hardwarekomponente, insbesondere werden diese nicht negative beeinflusst. Mithin wird das Update nach Ausführungsformen als kompatible angesehen. Ferner kann eine Änderung kompatibel sein, wenn durch die Änderung ein zusätzlicher oder verbesserter Dienst implementiert wird, für dessen Nutzung die Hardwarekomponente konfiguriert ist. Ist die prüfende Hardwarekomponente im Falle des zuvor genannten Beispiels dazu konfiguriert den bestehenden Dienst zu nutzen, so ist das Update kompatible, wenn die prüfende Hardwarekomponente auch zur Nutzung des geupdaten Dienst konfiguriert ist.

Ausführungsformen können den Vorteil haben, dass das Hardwaresystem selbstständig ohne zentrale Kontrolleinheit die Kompatibilität einer Änderung der Systemkonfiguration prüfen und deren Implementierung steuern kann. Ferner bietet die Verwendung der Blockchain eine Möglichkeit zur fälschungssicheren Protokollierung der vorgenommenen Änderungen. Zugleich stellen die Blockchain und ihr Abstimmungsmechanismus zur Konsensbildung ein effizientes Verfahren bereit, um sicherzustellen, dass eine Änderung auch tatsächlich nur dann implementiert wird, wenn ein Konsens zwischen den Hardwarekomponenten über die Kompatibilität dieser Änderung mit den individuellen Konfigurationen der Komponenten besteht.

Bei den Hardwarekomponenten kann es sich beispielsweise um "smart devices" handeln. Bei "intelligente Gegenstände" (auch "smart devices" genannt) handelt es sich um Gegenstände des Alltags, welche informationstechnisch aufgerüstete und dazu konfiguriert sind selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können. Ein Schlagwort für diese Entwicklung ist beispielsweise das sogenannte Internet der Dinge (abgekürzt auch IoT von "internet of things").

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten verstanden, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor der Hardwarekomponente möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung zwischen dem ID-Provider-Computersystem und dem Computersystem und/oder den Sensorgeräten oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann das ID-Provider-Computersystem ebenso wie das Computersystem und/oder Sensorgeräte eine Standardfunkschnittstelle zur Anbindung an ein WLAN aufweisen, an die das ID-Provider-Computersystem und/oder das Computersystem und/oder Sensorgeräte zur Herstellung einer lokalen Verbindung für die Übertragung des Authentifizierungstokens angeschlossen sein kann. Ferner kann es sich um ein öffentliches Netzwerk, wie beispielsweise das Internet handeln.

Bei einem Dienst handelt es sich beispielsweise um eine fachliche Bündelung von Funktionen in einer elektronischen Komponente, d.h. einer der Hardwarekomponenten. Die Hardwarekomponente bildet beispielsweise eine elektronische, autarke Einheit, die zusammenhängende Funktionalitäten bündelt und über eine definierte Schnittstelle zur Verfügung stellt. Ein Dienst kann dabei software- und/oder hardwarebasiert sein. Beispiele von Diensten umfassen Webdienste, Netzwerkdienste, Systemdienste oder Telekommunikationsdienste.

Ein Dienst einer Hardwarekomponente stellt eine Funktionalität für andere Hardwarekomponenten des Hardwaresystems über ein Netzwerk zur Verfügung, welches die Hardwarekomponenten des Hardwaresystems verbindet. Beispielsweise ermöglicht ein Dienst eine Maschine-zu-Maschine-Kommunikation der Hardwarekomponenten über das Netzwerk auf Basis eines Kommunikationsprotokolls. Beispielsweise werden Daten ausgetauscht und auf entfernten Hardwarekomponenten über das Netzwerk Funktionen aufgerufen. Bei diesen Funktionen kann es sich um Hardware- und/oder Softwarefunktionen handeln. Jeder Dienst besitzt beispielsweise einen Uniform Resource Identifier (URI), über welchen der Dienst eindeutig identifizierbar ist, sowie eine Schnittstellenbeschreibung in maschinenlesbarem Format, welche definiert, wie mit dem Dienst zu interagieren ist.

Beispielsweise umfasst eine der Hardwarekomponenten ein Programm, welches eine Anfragen an einen von einer anderen Hardwarekomponente zur Verfügung gestellten Dienst sendet. Der angefragte Dienst sendet beispielsweise in Antwort auf die Anfrage angefragte Daten zurück und/oder führt eine angefragte Funktion aus. Von den Hardwarekomponenten bereitgestellte Dienste umfassen beispielsweise einen automatisierten Datenaustausch oder ein Aufrufen von Funktionen auf anderen Hardwarekomponenten des Hardwaresystems und/oder entfernten Computersystemen, welche nicht Bestandteil des Hardwaresystems sind.

Beispielsweise stellt eine der Hardwarekomponenten eine Beschreibung des entsprechenden Dienstes bereit. Beispielsweise wird die Beschreibung in einem Verzeichnis bereitgestellt, auf welches andere Hardwarekomponenten, welche den Dienst in Anspruch nehmen möchten und/oder einen entsprechenden Dienst suchen, zugreifen und durchsuchen können. Anhand des Verzeichnisses kann beispielsweise ein benötigter Dienst ausgesucht werden. Ferner können der Beschreibung beispielsweise Angaben bezüglich zum Anfordern des entsprechenden Dienstes notwendiger Voraussetzungen und/oder Verfahrensschritten entnommen werden. Nach Ausführungsformen werden ferner Protokolldetails zwischen der Hardwarekomponente, welche einen Dienst bereitstellt, und der Hardwarekomponente ausgetauscht, welche den Dienst in Anspruch nehmen möchte.

Zum Bereitstellen eines Dienstes kann eine Hardwarekomponente ein Dienstprogramm umfassen. Bei einem Dienstprogramm kann es sich beispielsweise um ein Computerprogramm handeln, welches allgemeine, insbesondere systemnahe Aufgaben ausführt.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Blockchain" wird hier und im Folgenden eine geordnete Datenstruktur verstanden, wobei jeder Block der Blockchain durch einen Hash-Wert identifiziert wird und einen Vorgängerblock in der Blockchain referenziert, für Beispiele einer Blockchain vergleiche https://en.wikipedia.org/wiki/Block_chain_(database) und "Mastering Bitcoin", Chapter 7, The Blockchain, Seite 161 ff. Eine Ausführungsform von einer Blockchain wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet. Nach alternativen Ausführungsformen kann der rechenintensive Prozess des Minings auch durch einen alternativen Prozess der Blockerzeugung beruhend auf einem Konsens mit dem neuen Block ersetzt sein. Die Einträge der Datenblöcke können beispielsweise zu speichernde Daten umfassen.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte erfolgen. Jeder Block der Blockchain kann in seinem Header den Hash des gesamten vorherigen Blockheaders enthalten. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise stimmen alle Teilnehmer ab über einen vorgeschlagenen Eintrag für die Blockchain ab. Wird ein notwendiges Zustimmungsquorum erreicht, d.h. stimmt eine ausreichende Anzahl der Teilnehmer zu, wird der vorgeschlagene Eintrag in die Blockchain aufgenommen. Beispielsweise umfasst ein zusätzlicher Block der Blockchain, welcher der Blockchain hinzugefügt wird, den entsprechenden Eintrag.

Unter einem Zustimmungsquorum wird hier notwendige Anzahl an Zustimmungen der Hardwarekomponenten verstanden, die erreicht sein muss, damit eine vorgeschlagene Änderung von dem Hardwaresystem angenommen bzw. bestätigt wird, d.h. dass ein Konsens erzielt wird, die vorgeschlagene Änderung anzunehmen bzw. zu bestätigen.

Nach einer Ausführungsform führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Wird das Programmodul ausgeführt, so wird beispielsweise automatisch eine Abstimmung aller stimmberechtigten Teilnehmer durchgeführt und das Ergebnis der Abstimmung ausgewertet. Das Programmodul kann in einem Block der Blockchain oder über mehrere Blöcke der Blockchain verteilt gespeichert sein. Bei einem Programmmodul kann es sich beispielsweise um einen "smart contract" handeln, wie er beispielsweise in der Open Source Ethereum Blockchain implementierbar ist.

Daten können beispielsweise durch Verschlüsselung mit einem asymmetrischen Schlüsselpaar, d.h. einem privaten oder vorzugsweise einem öffentlichen kryptographischen Schlüssel, oder einem symmetrischen kryptographischen Schlüssel kryptographisch gesichert werden. Eine kryptographische Sicherung kann zusätzlich oder alternativ eine Signatur mit einem Signaturschlüssel, z.B. einem privaten kryptographischen Schlüssel eines asymmetrischen Schlüsselpaars. Eine kryptographische Sicherung von Datenübertragungen kann insbesondere im Fall von kontaktlosen, z.B. kabellosen, Datenübertragungen von Vorteil sein, da die übertragenen Signale in diesem Fall leichter abgefangen werden können als im Fall einer kontaktbehaftete, z.B. kabelbasierten, Datenübertragung.

Beispielsweise kann eine kryptographisch gesicherte Übertragung von Daten eine Übertragung über eine verschlüsselte Ende-zu-Ende-Verbindung umfassen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Verund/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet oder Intranets, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Nach Ausführungsformen umfasst das Hardwaresystem zusätzlich zu der Mehrzahl der Hardwarekomponenten weitere Hardwarekomponenten, deren Zustimmung für das für den Konsens notwendige Zustimmungsquorum nicht relevant ist. Nach Ausführungsformen wird die Änderungsanfrage den entsprechen weiteren Hardwarekomponenten nicht vorgelegt. Nach Ausführungsformen sind die weiteren Hardwarekomponenten nicht konfiguriert zum Empfang und/oder zur Prüfung der Änderungsanfrage.

Nach Ausführungsformen erfordert das für einen Konsens notwendige Zustimmungsquorum, dass die Anzahl der Zustimmungen der Hardwarekomponenten der Mehrzahl von Hardwarekomponenten einen vordefinierten Schwellenwert überschreitet. Ausführungsformen können den Vorteil haben, dass so sichergestellt werden kann, dass der Systemkonfiguration weiterhin eine ausreichende Anzahl an Hardwarekomponenten mit der Änderung kompatibel ist und die implementierte Änderung der Systemkonfiguration zu nutzen vermag bzw. durch diese in ihrer Funktionalität nicht beeinträchtigt wird.

Nach Ausführungsformen ist der Schwellenwert abhängig von der Art der angefragten ersten Änderung der Systemkonfiguration. Ausführungsformen können den Vorteil haben, dass bei Änderungen, welche keine weitreichenden Folgen für die Funktionsfähigkeit des Hardwaresystems haben ein niedrigerer Schwellenwert angesetzt werden kann als für Änderungen mit weitreichenden Folgen. Sind durch die Änderung beispielsweise sicherheitsrelevante Funktionen des Systems, wie etwa ein Verschlüsselungsalgorithmus, betroffen, so ist der Schwellenwert hoch angesetzt. Beispielsweise ist die Zustimmung aller Hardwarekomponenten erforderlich. Wird durch die Änderung hingegen beispielsweise ein fakultativer Dienst verbessert, etwa die Anzeige einer Nutzerschnittstelle, so kann der Schwellenwert niedriger angesetzt. Zugleich kann ausgeschlossen werden, dass eine Gefahr besteht, die Funktionalität des Systems nachhaltig zu beeinflussen.

Nach Ausführungsformen ist beispielsweise ein Klassifikationssystem zum Klassifizieren von Anfragen vorgegeben. Jede Anfrage wird gemäß dem Klassifikationssystem klassifiziert, wobei jeder Klasse des Klassifikationssystems jeweils ein oder mehrere Kriterien, wie etwa ein Schwellenwert eines für einen Konsens notwendigen Zustimmungsquorum, zugeordnet sind. Anhand der Klassifikation kann somit bestimmt werden, welcher Schwellenwert zu erfüllen ist. Die Klassifikation erfolgt beispielsweise jeweils durch die die Anfrage empfangenden Hardwarekomponenten.

Nach Ausführungsformen ist den einzelnen Hardwarekomponenten jeweils ein Gewichtungsfaktor zugeordnet und die Anzahl der Zustimmungen der Hardwarekomponenten wird als gewichtete Summe unter Berücksichtigung der Gewichtungsfaktoren der zustimmenden Hardwarekomponenten bestimmt. Ausführungsformen können den Vorteil haben, dass somit Unterschiede der abstimmenden Hardwarekomponenten berücksichtigt werden können. Beispielsweise kann eine zu implementierende Änderung der Systemkonfiguration von großer Bedeutung für die Funktionsfähigkeit des Hardwaresystems sein. Beispielsweise soll ein Update implementiert werden, durch welches eine schwerwiegende Sicherheitslücke geschlossen wird. Die Gewichtungsfaktoren können den einzelnen Hardwarekomponenten beispielsweise in Abhängigkeit von ihrer jeweiligen Bedeutung für die Funktionsfähigkeit des Hardwaresystems zugeordnet sein. Durch die Berücksichtigung der Gewichtungsfaktoren kann sichergestellt werden, dass die Änderung nur implementiert wird, wenn zumindest alle für die Funktionsfähigkeit des Hardwaresystems maßgeblichen Hardwarekomponenten mit dieser kompatibel sind und der Änderung zugestimmt haben. Falls durch für die Funktionsfähigkeit des Hardwaresystems zweitrangige Hardwarekomponenten durch die Änderung in ihrer Funktionsfähigkeit zunächst beeinträchtigt werden, so kann dies beispielsweise durch ein weiteres Update nachträglich behoben werden. Die problematische Sicherheitslücke kann so jedoch zeitnah geschlossen und zugleich zumindest die grundlegende Funktionsfähigkeit des Hardwaresystems aufrechterhalten werden.

Nach Ausführungsformen umfassen die Mehrzahl von Hardwarekomponenten zumindest eine Hardwarekomponente, deren Zustimmung für die Eintragung der angefragten ersten Änderung der Systemkonfiguration des Hardwaresystems in die Blockchain obligatorisch ist. Ferner erfordert das für einen Konsens notwendige Zustimmungsquorum eine Zustimmung der zumindest einen obligatorischen Hardwarekomponente. Ausführungsformen können den Vorteil haben, dass es bei der obligatorischen Hardwarekomponente beispielsweise um eine für die Funktionsfähigkeit des Hardwaresystems essentielle Hardwarekomponente handelt, deren Kompatibilität mit der angefragten Änderung der Systemkonfiguration sichergestellt werden muss. Somit kann durch die Voraussetzung, dass die Zustimmung der entsprechenden Hardwarekomponente obligatorisch für den Konsens bzw. für das für den Konsens notwendige Zustimmungsquorum ist, sichergestellt werden, dass die Funktionsfähigkeit des Hardwaresystems nach Implementierung der angefragten Änderung der Systemkonfiguration erhalten bleibt. Dies stellt insbesondere auch dann eine Funktionsfähigkeit des Hardwaresystems sicher, wenn das für einen Konsens notwendige Zustimmungsquorum keine Zustimmung aller Hardwarekomponenten der Mehrzahl von Hardwarekomponenten erfordert.

Nach Ausführungsformen umfassen die Mehrzahl von Hardwarekomponenten mehrere Hardwarekomponenten, deren Zustimmung für die Eintragung der angefragten ersten Änderung der Systemkonfiguration des Hardwaresystems in die Blockchain obligatorisch ist, während das für einen Konsens notwendige Zustimmungsquorum eine Zustimmung der mehreren obligatorischen Hardwarekomponente erfordert.

Nach Ausführungsformen umfasst die Mehrzahl von Hardwarekomponenten eine Mehrzahl von Untergruppen, wobei das für einen Konsens notwendige Zustimmungsquorum das Erreichen eines untergruppenindividuellen Zustimmungsquorums für jede der Untergruppen erfordert. Beispielsweise können die Hardwarekomponenten gemäß ihrer Art in Untergruppen eingeteilt sein. Ausführungsformen können den Vorteil haben, dass sicherheitsrelevante und/oder für die Funktionsfähigkeit des Hardwaresystems essentielle Hardwarekomponenten Untergruppen zugeordnet werden, für welche ein höheres untergruppenindividuelles Zustimmungsquorum erforderlich ist, als für ein Untergruppen, welche Hardwarekomponenten umfassen, die weder sicherheitsrelevant noch essentiell für die Funktionsfähigkeit des Hardwaresystems sind. Beispielsweise kann ein untergruppenindividuelles Zustimmungsquorum einer ersten Untergruppe Zustimmungen aller Hardwarekomponenten der ersten Untergruppe erfordern, während ein untergruppenindividuellen Zustimmungsquorum einer zweiten Untergruppe keine Zustimmung aller Hardwarekomponenten der zweiten Untergruppe erfordert, sondern lediglich Zustimmungen eines Teils der entsprechenden Hardwarekomponenten.

Nach Ausführungsformen erfordert das für einen Konsens notwendige Zustimmungsquorum keine Zustimmung aller Hardwarekomponenten der Mehrzahl von Hardwarekomponenten. Ausführungsformen können den Vorteil haben, dass nicht notwendiger Weise eine Zustimmung aller Hardwarekomponenten vorliegen muss. Beispielsweise kann es für das notwendige Zustimmungsquorum genügen, dass eine ausreichende Anzahl an Hardwarekomponenten der Mehrzahl von Hardwarekomponenten zustimmt. Sollten von eine oder mehreren Hardwarekomponenten keine Zustimmungen vorliegen, beispielsweise weil die entsprechenden Hardwarekomponenten Funktionsstörungen aufweisen und/oder ausgefallen sind, so kann die Änderung der Systemkonfiguration dennoch für die verbleibenden einwandfrei funktionierenden Hardwarekomponenten implementiert werden. Somit kann beispielsweise die Manipulationssicherheit des Hardwaresystems erhöht werden. Selbst wenn es einem Störer gelingen sollte eine oder mehrere Hardwarekomponenten zu übernehmen und so zu manipulieren, dass sie ihre Zustimmung zu einer kompatiblen Änderung der Systemkonfiguration verweigern, wird es dem Störer dadurch noch nicht ermöglicht den Konsens und damit die Implementierung der Änderung zu verhindern. Solange eine für das notwendige Zustimmungsquorum ausreichende Anzahl an Zustimmungen erreicht wird, liegt ein Konsens vor und die Änderung der Systemkonfiguration wird infolge der Eintragung in die Blockchain implementiert. Andererseits kann durch eine Wahl eines geeigneten Schwellenwerts für die Anzahl an Zustimmungen, welche für das Zustimmungsquorum notwendig sind, von unter 100%, aber beispielsweise über 50%, z.B. mindestens 51%, mindestens 60%, mindestens 70%, mindestens 75%, mindestens 80% und/oder mindestens 90%, sichergestellt werden, dass der Störer darüber hinaus effektiv daran gehindert werden kann, das notwendige Zustimmungsquorum zur Implementierung einer mit den Konfigurationen der

Hardwarekomponenten, insbesondere mit deren Sicherheitskonfigurationen, nicht kompatiblen Änderung der Systemkonfiguration zu erzwingen

Nach Ausführungsformen erfordert das für einen Konsens notwendige Zustimmungsquorum eine Zustimmung aller Hardwarekomponenten der Mehrzahl von Hardwarekomponenten. Ausführungsformen können den Vorteil haben, dass sichergestellt werden kann, dass alle Hardwarekomponenten kompatibel mit angefragten Änderung der Systemkonfiguration sind. Wird die entsprechende Änderung daraufhin implementiert, so kann ausgeschlossen werden, dass es zu keinen Funktionsstörungen des Hardwaresystems infolge der Implementierung kommt.

Nach Ausführungsformen umfassen die Speicher der Hardwarekomponenten jeweils einen geschützten Speicherbereich, in welchem ein privater kryptographischer Schlüssel eines der jeweiligen Hardwarekomponente zugeordneten asymmetrischen Schlüsselpaars gespeichert ist. Das Verfahren umfasst ferner:
Signieren der einzelnen Zustimmungen durch die jeweilige erzeugende Hardwarekomponente unter Verwendung des in dem geschützten Speicherbereich der erzeugenden Hardwarekomponente gespeicherten privaten kryptographischen Schlüssels.

Ausführungsformen können den Vorteil haben, dass durch die Signatur der Zustimmungen mit den privaten Schlüsseln der Hardwarekomponenten, die Authentizität der jeweiligen Zustimmung belegt werden kann. Nach Ausführungsformen umfasst der Eintrag der Änderung der Systemkonfiguration in die Blockchain die Signaturen der Zustimmungen der Hardwarekomponenten, welche zu dem Konsens beigetragen haben.

Nach einer Ausführungsform dient die Blockchain der Dokumentation von Zustimmungen der Hardwarekomponenten zu angefragten Änderungen der Systemkonfiguration des Hardwaresystems. Ausführungsformen können den Vorteil haben, dass durch diese Dokumentierung bzw. Protokollierung von allen Hardwarekomponenten, insbesondere von nachträglich zu dem Hardwaresystem hinzugefügten Hardwarekomponenten, nachvollzogen werden kann, welche Änderungen angenommen wurde und wie die resultierende Systemkonfiguration aussieht.

Nach Ausführungsformen sind alle Hardwarekomponenten dazu konfiguriert ihre Zustimmungen zu signieren, d.h. sie umfassen einen als Signaturschlüssel verwendbaren privaten kryptographischen Schlüssel in einem geschützten Speicherbereich ihres Speichers. Nach weiteren Ausführungsformen umfassen nicht alle Hardwarekomponenten einen solchen Schlüssel, d.h. nur ein Teil der Hardwarekomponenten der Mehrzahl an Hardwarekomponenten ist dazu konfiguriert, seine jeweilige Zustimmung zu signieren. Die dient somit ferner der Kontrolle bzw. Steuerung der Implementierung der Änderung der Systemkonfiguration.

Nach Ausführungsformen ist das Eintragen der angefragten ersten Änderung in die Blockchain eine notwendige Voraussetzung für das Implementieren der angefragten ersten Änderung der Systemkonfiguration in dem Hardwaresystem. Ausführungsformen können den Vorteil haben, dass die Änderung nur Implementiert wird, wenn auch tatsächlich alle oder zumindest die dafür notwendigen Hardwarekomponenten der Mehrzahl von Hardwarekomponenten die angefragte Änderung auf Kompatibilität geprüft und der ihr explizit zugestimmt haben.

Nach Ausführungsformen erfolgt die Eintragung der angefragten ersten Änderung der Systemkonfiguration in die Blockchain durch die anfragende erste Hardwarekomponente. Ausführungsformen können den Vorteil haben, dass die Blockchain durch die Hardwarekomponenten der Mehrzahl von Hardwarekomponenten selbst verwaltet wird. Nach Ausführungsformen ist jede der entsprechenden Hardwarekomponenten dazu konfiguriert, eine Änderung in der Systemkonfiguration anzufragen und, falls ein für einen Konsens notwendiges Zustimmungsquorum erreicht wird, die Änderung in die Blockchain einzutragen.

Nach Ausführungsformen umfasst die Blockchain ein Programmmodul zum Steuern der Eintragung der Änderung der Systemkonfiguration. Zum Eintragen der Änderung führt die eintragende Hardwarekomponente das Programmodul aus. Nach Ausführungsformen prüft das Programmodul als Voraussetzung für die Eintragung, ob ein Konsens über die Eintragung zwischen den Hardwarekomponenten der Mehrzahl von Hardwarekomponenten erzielt wurde. Nach Ausführungsformen hat das Programmodul Zugriff auf die öffentlichen kryptographischen Schlüssel, welche den als Signaturschlüssel verwendeten privaten kryptographischen Schlüsseln der Hardwarekomponenten zugeordnet sind. Nach Ausführungsformen sind die öffentlichen kryptographischen Schlüssel, welche als Signaturprüfschlüssel verwendet werden, in der Blockchain gespeichert.

Umfasst die Änderung der Systemkonfiguration eine Aufnahme einer neuen Hardwarekomponente in das Hardwaresystem, so umfasst der Eintrag der Änderung nach Ausführungsformen ferner den öffentlichen Schlüssel der zusätzlich aufgenommenen Hardwarekomponente.

Nach Ausführungsformen erfolgt die Eintragung der angefragten ersten Änderung der Systemkonfiguration in die Blockchain durch eine zum Eintragen von Änderungen der Systemkonfiguration in die Blockchain ausgewählte Hardwarekomponente der Mehrzahl von Hardwarekomponenten. Ausführungsformen können den Vorteil haben, dass nur solche Hardwarekomponenten der Mehrzahl von Hardwarekomponenten zum Eintragen von Änderungen in die Blockchain konfiguriert sind, welche physisch und/oder kryptographisch gegen unberechtigte Zugriffe und Manipulationen geschützt sind. Beispielsweise umfassen entsprechende Hardwarekomponenten ein Sicherheitsmodul, durch welches sie gegen Manipulationen geschützt werden. Somit kann verhindert werden, dass bestehende Einträge in der Blockchain durch Übernahme einer zum Eintragen von Änderungen konfigurierten Hardwarekomponente manipuliert bzw. unberechtigter Weise zusätzliche Einträge hinzugefügt werden.

Ein "Sicherheitsmodul" stellt kryptographische Kernroutinen in Form von kryptographischen Programminstruktionen mit kryptographischen Algorithmen für Signaturerstellung und -prüfung, Schlüsselgenerierung, Schlüsselaushandlung, Ver- und Entschlüsselung von Daten und/oder Zufallszahlengenerierung bereit und kann ferner als sicherer Speicher für kryptographische Schlüssel dienen.

Beispielsweise sind zumindest Teile des Sicherheitsmoduls signiert. Vor einer Nutzung des Sicherheitsmoduls wird geprüft, ob die Signatur bzw. die Signaturen, valide sind. Wenn eine der Signaturen nicht valide ist, wird die Nutzung des Sicherheitsmoduls und/oder der durch das Sicherheitsmodul gesicherten Hardwarekomponente gesperrt.

Des Weiteren kann ein Sicherheitsmodul Mittel zur kryptographischen Datensicherung umfassen, wie beispielsweise einen Zufallszahlengenerator, einen Generator für kryptographische Schlüssel, einen Hashgenerator, ein Verschlüsselungs- und Entschlüsselungsmodul, ein Signaturmodul, Zertifikate und/oder einen oder mehrere nicht migrierbare kryptographische Schlüssel.

Nach Ausführungsbeispielen ist das Sicherheitsmodul als ein sogenanntes Tamper Proof Module oder Trusted Platform Module (TPM) ausgebildet, welche auch als Tamper Resistant Module (TRM) bezeichnet werden. Beispielsweise sind zumindest Teile der Hardwarekomponente signiert, wie z.B. Programmkomponenten und/oder Hardwarebestandteile, die eine digitale Signatur tragen können. Vor einer Nutzung der Hardwarekomponente prüft das TRM, ob die Signatur bzw. die Signaturen, valide sind. Wenn eine der Signaturen nicht valide ist, sperrt das TRM die Nutzung der Hardwarekomponente. Ein TPM umfasst beispielsweise einen Mikrokontroller nach der TCG-Spezifikation wie in ISO/IEC 11889, der eine Hardwarekomponente um grundlegende Sicherheitsfunktionen erweitert.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem kann das Sicherheitsmodul zusätzliche Maßnahmen gegen Missbrauch aufweisen, insbesondere gegen unberechtigte Zugriffe auf Daten im Speicher des Sicherheitsmoduls. Beispielsweise umfasst ein Sicherheitsmodul Sensoren zur Überwachung des Zustands des Sicherheitsmoduls sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitsmodul nichtflüchtige Speicher mit einem geschützten Speicherbereich umfassen.

Nach einer Ausführungsform der Erfindung beinhalten die Mittel zum Schutz des Sicherheitsmoduls gegen unbefugte Manipulationen mechanische Mittel, die z.B. das Öffnen des Sicherheitsmoduls oder seiner Teile verhindern sollen, oder die bei dem Versuch eines Eingriffs in das Sicherheitsmodul dieses unbrauchbar machen, beispielsweise indem ein Datenverlust eintritt. Beispielsweise können hierzu sicherheitskritische Teile des Sicherheitsmoduls in Epoxidharz eingegossen sein, wobei ein Versuch, eine betreffende Komponente aus dem Epoxidharz zu entfernen, zu einer unvermeidlichen Zerstörung dieser Komponente führt.

Durch die Mittel zum Schutz gegen unbefugte Manipulationen wird durch technische Maßnahmen die Vertrauenswürdigkeit des Sicherheitsmoduls, das heißt seine Funktion als "Vertrauensanker", gewährleistet. Beispielsweise wird das Sicherheitsmodul von einer vertrauenswürdigen Institution, wie z.B. durch ein Trust-Center, konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Sicherheitsmoduls nicht modifiziert werden.

Nach Ausführungsformen ist zumindest ein Sicherheitsmodul vorgesehen, welches eine Mehrzahl von Hardwarekomponenten des Hardwaresystems schützt. Nach Ausführungsformen prüft das Sicherheitsmodul die von der Blockchain umfassten Signaturen der Hardwarekomponenten. Nach Ausführungsformen prüft das Sicherheitsmodul ferner die Konfiguration einer zugeordneten Hardwarekomponente unter Verwendung der Blockchain. Beispielsweise prüft das Sicherheitsmodul, ob die Konfiguration des Hardwaremoduls mit der von der Blockchain protokollierten Systemkonfiguration übereinstimmt bzw. kompatibel ist.

Nach Ausführungsformen ist die Blockchain zumindest zentral in dem Speicher einer oder mehrerer zum Speicher der Blockchain ausgewählten Hardwarekomponente gespeichert. Ausführungsformen können den Vorteil haben, dass das die Blockchain vor unberechtigten Zugriffen geschützt werden kann.

Nach Ausführungsformen ist die Blockchain dezentral in den Speichern aller Hardwarekomponenten der Mehrzahl von Hardwarekomponenten gespeichert. Ausführungsformen können den Vorteil haben, dass jede der Hardwarekomponenten Zugriff auf die Blockchain besitzt und die Korrektheit der Einträge prüfen kann.

Nach Ausführungsformen umfasst das Implementieren der angefragten ersten Änderung der Systemkonfiguration in dem Hardwaresystem eine Änderung der Konfigurationsdaten ein oder mehrerer der Hardwarekomponenten der Mehrzahl von Hardwarekomponenten. Ausführungsformen können den Vorteil haben, dass so beispielsweise Änderungen mehrerer Hardwarekomponenten parallel gesteuert werden können.

Nach Ausführungsformen umfasst das Verfahren im Falle, dass das für den Konsens notwendige Zustimmungsquorum nicht erreicht wird, ferner: Erneutes Senden der ersten Änderungsanfrage durch die anfragende erste Hardwarekomponente. Wird kein Konsens über Annahme einer Änderungsfrage erzielt, da diese mit den aktuellen Konfigurationen ein oder mehrerer der Hardwarekomponenten nicht kompatibel ist, kann dies bei einer erneuten Anfrage zu einem späteren Zeitpunkt bereits anders sen. Hat sich zwischenzeitlich die Konfiguration der nicht kompatiblen Hardwarekomponenten geändert, beispielsweise durch ein entsprechendes Softwareupdate, sodass diese nun kompatibel sind, hat die erneut gesendete Änderungsanfrage nun Erfolg. Ausführungsformen können den Vorteil haben, dass zeitliche Änderungen der Konfigurationen der Hardwarekomponenten berücksichtigt werden können.

Nach Ausführungsformen sendet die anfragende erste Hardwarekomponente die erste Änderungsanfrage nach Ablauf einer vordefinierten Zeitspanne erneut. Ausführungsformen können den Vorteil haben, dass sie eine einfache und effektive Steuerung des wiederholten Sendens der Änderungsanfrage ermöglichen. Die Änderungsanfrage geht somit nicht verloren und kann automatisch in das Hardwaresystem implementiert werden, sobald die dafür notwendigen Voraussetzungen erfüllt sind.

Nach Ausführungsformen sendet die anfragende erste Hardwarekomponente die erste Änderungsanfrage auf eine erfolgreiche zweite Änderung der Systemkonfiguration hin erneut. Ausführungsformen können den Vorteil haben, dass die erste Änderungsanfrage beispielsweise erneut gestellt werden kann, sobald die für ihre Implementierung notwendigen Voraussetzungen erfüllt werden. Diese Voraussetzungen können beispielsweise durch die erfolgreiche zweite Änderung erstellt werden. Beispielsweise ist der ersten Änderungsanfrage eine notwendige Voraussetzung zugeordnet. Sobald eine zweite Änderung erfolgt, welche die entsprechende notwendige Voraussetzung erfüllt, wird die erste Änderungsanfrage erneut gesendet.

Nach Ausführungsformen sendet die anfragende erste Hardwarekomponente die erste Änderungsanfrage wiederholt bis das für einen Konsens notwendige Zustimmungsquorum erreicht wird. Ausführungsformen können den Vorteil haben, dass die erste Änderungsanfrage nicht verloren geht, sondern solange gesendet wird bis ein Konsens vorliegt und die angefragte Änderung implementiert werden kann. Beispielsweise kann der ersten Änderungsfrage ein Indikator ihrer Wichtigkeit zugeordnet sein. Im Falle eines Indikators, welcher eine hohe Wichtigkeit anzeigt, wird die erste Änderungsanfrage wiederholt gesendet bis das für einen Konsens notwendige Zustimmungsquorum erreicht wird. Im Falle eines Indikators, welcher eine niedrigere Wichtigkeit anzeigt, erfolgt ein wiederholtes Senden der ersten Änderungsanfrage bis das für einen Konsens notwendige Zustimmungsquorum oder eine festgelegte maximale Anzahl an Wiederholungen erreicht wird. Die festgelegte maximale Anzahl an Wiederholungen kann beispielsweise von der der ersten Änderungsanfrage zugeordneten Wichtigkeit abhängen und mit abnehmender Wichtigkeit ebenfalls abnehmen. Beispielsweise gibt der Identifikation der Wichtigkeit die maximale Anzahl an Wiederholungen an. Ist die maximale Anzahl an Wiederholungen erreicht, wird die erste Änderungsanfrage beispielsweise nicht nochmals gesendet, sondern gelöscht. Dies schließt jedoch nicht aus, dass die erste Änderungsanfrage später erneut initiiert bzw. erstellt werden kann und mit der erneut erstellten ersten Änderungsanfrage das Zählen der Wiederholungen erneut beginnt. Nach Ausführungsformen kann der erneut initiierten ersten Änderungsanfrage eine andere Wichtigkeit, insbesondere eine höhere Wichtigkeit, als zuvor zugeordnet sein.

Nach Ausführungsformen umfasst die angefragte Änderung der Systemkonfiguration des Hardwaresystems ein Hinzufügen, Entfernen und/oder Ändern eines durch zumindest eine Hardwarekomponente der Mehrzahl von Hardwarekomponenten bereitgestellten Dienst. Ausführungsformen können den Vorteil haben, dass das Hardwaresystem somit selbständig steuern kann, ob ein Dienst innerhalb des Hardwaresystems hinzugefügt, entfernt oder geändert wird. Beispielsweise kann ein neuer Dienst hinzugefügt werde, wie etwa eine neue Funktionalität. Ferner kann ein bestehender Dienst entfernt werde, etwa wenn dieser durch einen neuen Dienst ersetzt wird oder nicht mehr genutzt werden soll, beispielsweise wegen Sicherheitsbedenken. Zudem kann ein Dienst geändert, beispielsweise geupdatet werden und/oder an Änderungen anderer Dienstes angepasst werden.

Nach Ausführungsformen wird der Dienst von allen Hardwarekomponenten der Mehrzahl von Hardwarekomponenten bereitgestellt. Ausführungsformen können den Vorteil haben, dass beispielsweise von allen Hardwarekomponenten gemeinsam genutzte Dienstes, wie etwa Kommunikationsprotokolle und/oder kryptographische Sicherungsprotokolle, verwaltet werden können. Kryptographische Sicherungsprotokolle können beispielsweise kryptographische Verschlüsselungs- und/oder Signaturalgorithmen umfassen.

Nach Ausführungsformen umfasst der Dienst ein Bereitstellen einer Softwareressource und/oder einer Hardwareressource. Ausführungsformen können den Vorteil haben, dass die Verwaltung der von dem Hardwaresystem bzw. innerhalb des Hardwaresystems bereitgestellten Dienstes sich sowohl auf Softwareressourcen, wie etwa Anwendungsprogramme und/oder Betriebsprogramme, als auch auf Hardwareressourcen, wie etwa Prozessoren, Speicher, Kommunikationsschnittstellen, Sensoren, Eingabevorrichtungen, Ausgabevorrichtungen etc., umfasst. Somit können sowohl Änderungen der Softwarekonfiguration von einzelnen und/oder allen Hardwarekomponenten ebenso wie Hardwaremodifikationen, insbesondere auch das Hinzufügen zusätzlicher und/oder das Entfernen vorhandener Hardwarekomponenten, gehandhabt werden.

Nach Ausführungsformen erfolgt das Erzeugen und Senden der ersten Änderungsanfrage durch die anfragende erste Hardwarekomponente auf eine Konfigurationsänderung der anfragenden ersten Hardwarekomponente hin. Ausführungsformen können den Vorteil haben, dass beispielsweise eine Hardware- und/oder Softwareressource der ersten Hardwarekomponente geändert wird. Um diese geänderte Hardware-und/oder Softwareressource auch den anderen Hardwarekomponenten des Hardwaresystems zur Verfügung stellen zu können, wird die ersten Änderungsanfrage erzeugt und gesendet. Wenn die Änderung erfolgreich ist, können auch die anderen Hardwarekomponenten des Hardwaresystems die geänderten Hardware-und/oder Softwareressourcen der ersten Hardwarekomponente nutzen.

Nach Ausführungsformen handelt es sich bei der anfragenden ersten Hardwarekomponente um eine in das Hardwaresystem zu integrierende Hardwarekomponente und die angefragte erste Änderung der Systemkonfiguration umfasst ein Anmelden der zu integrierenden ersten Hardwarekomponente sowie deren Integration in das Hardwaresystem. Ausführungsformen können den Vorteil haben, dass so zusätzliche Hardwarekomponente wie etwa die erste Hardwarekomponente in das Hardwaresystem integriert werden können. Die zusätzliche Hardwarekomponente meldet sich durch ersten Änderungsanfrage bei dem Hardwaresystem an. Die Anmeldung ist erfolgreich, wenn das für den Konsens notwendige Zustimmungsquorum erreicht wird. Die erste Hardwarekomponente wird somit in Hardwaresystem integriert. Mit anderen Worten werden das Hardwaresystem bzw. die Hardwarekomponenten des Hardwaresystems in Folge der Änderungen so konfiguriert, dass sie die erste Hardwarekomponente nutzen bzw. von dieser genutzt werden können. Hierzu wird die erste Hardwarekomponente bei den anderen Hardwarekomponenten beispielsweise registriert. Nach Ausführungsformen umfasst die Registrierung ein Erfassen und/oder Speichern einer Liste der Dienst, welche die erste Hardwarekomponente bereitstellt. Die Liste umfasst dabei zumindest einen Dienst, welcher nach Ausführungsformen zugleich als Identifikator der ersten Hardwarekomponente dienen bzw. durch den Identifikator bereitgestellt werden kann.

Nach Ausführungsformen ist die anfragende erste Hardwarekomponente als Ersatz für eine auszuwechselnde zweite Hardwarekomponente in das Hardwaresystem zu integrieren und die angefragte erste Änderung der Systemkonfiguration umfasst ein Abmelden der auszuwechselnden zweiten Hardwarekomponente von dem Hardwaresystem. Ausführungsformen können den Vorteil haben, dass so vorhandene Hardwarekomponenten des Systems effizient gegen neuen Hardwarekomponenten ausgetauscht werden können.

Nach Ausführungsformen ist die anfragende erste Hardwarekomponente als Ersatz für eine auszuwechselnde zweite Hardwarekomponente in das Hardwaresystem zu integrieren, wobei das Verfahren ferner umfasst:
- Erstellen und Senden einer zweiten Änderungsanfrage zu einer dritten Änderung der Systemkonfiguration des Hardwaresystems durch die auszuwechselnde zweite Hardwarekomponente, wobei die dritte Änderung der Systemkonfiguration ein Abmelden der auszuwechselnden zweiten Hardwarekomponente von dem Hardwaresystem umfasst,
- Empfangen der zweiten Änderungsanfrage durch die weiteren Hardwarekomponenten der Mehrzahl von Hardwarekomponenten,
- Prüfen der zweiten Änderungsanfrage durch die weiteren Hardwarekomponenten auf ihre Kompatibilität mit der Konfiguration der jeweiligen empfangenden Hardwarekomponente unter Verwendung der Konfigurationsdaten der empfangenden Hardwarekomponente,
- im Falle, dass die angefragte dritte Änderung der Systemkonfiguration kompatible mit der Konfiguration der prüfenden Hardwarekomponente ist, Erzeugen und Senden einer Zustimmung zu der dritten Änderung der Systemkonfiguration durch die entsprechende Hardwarekomponente,
- im Falle, dass ein für einen Konsens notwendiges zweites Zustimmungsquorum der Hardwarekomponenten der Mehrzahl von Hardwarekomponenten erreicht wird, Eintragen der angefragten dritten Änderung der Systemkonfiguration des Hardwaresystems in die Blockchain,
- Abmelden der auszuwechselnden zweiten Hardwarekomponente von dem Hardwaresystem.

Ausführungsformen können den Vorteil haben, dass die zweite Hardwarekomponente nicht ohne Zustimmung der weiteren Hardwarekomponenten des Hardwaresystems abgemeldet. Nur falls ein für einen Konsens notwendiges Zustimmungsquorum der entsprechenden Hardwarekomponenten erreicht wird, wird die zweite Hardwarekomponente abgemeldet. Somit kann verhindert werde, dass eine zweite Hardwarekomponente, welche die weiteren Hardwarekomponenten weiterhin benötigen, abgemeldet und entfernt wird. Dies ermöglicht es Funktionsstörungen des Hardwaresystems zu vermeiden.

Nach Ausführungsformen ist das Eintragen der angefragten dritten Änderung in die Blockchain eine erste notwendige Voraussetzung für das Abmelden der auszuwechselnden zweiten Hardwarekomponente von dem Hardwaresystem. Ausführungsformen können den Vorteil haben, dass eine Abmeldung nur unter der Voraussetzung eines für einen Konsens notwendiges Zustimmungsquorum der weiteren Hardwarekomponenten des Hardwaresystems erfolgt. Fehlt es an einem Konsens, erfolgt keine Eintragung in die Blockchain und damit kein Abmelden der zweiten Hardwarekomponente. Ferner kann so sichergestellt werden, dass keine Änderungen an der Konfiguration des Hardwaresystems vorgenommen werden, welche nicht in der Blockchain protokolliert werden.

Nach Ausführungsformen ist das Eintragen der angefragten ersten Änderung in die Blockchain eine zweite notwendige Voraussetzung für das Abmelden der auszuwechselnden zweiten Hardwarekomponente von dem Hardwaresystem. Ausführungsformen können den Vorteil haben, dass die zweite Hardwarekomponente nicht abgemeldet wird, ohne dass die erste Hardwarekomponente, welche die zweite Hardwarekomponente ersetzen soll, angemeldet wurde. Somit kann sichergestellt werden, dass im Zuge des Ersetzens stets zumindest eine der beiden Hardwarekomponenten, d.h. entweder die zweite oder die erste Hardwarekomponente, angemeldet ist. So kann die Funktionsfähigkeit des Hardwaresystems auch während des Ersetzens sicherstellt werden.

Ausführungsformen umfassen ferner ein Hardwaresystem, welchem eine Blockchain zum Steuern einer Systemkonfiguration des Hardwaresystems zugeordnet ist. Die Blockchain umfasst Einträge mit Konfigurationsdaten des Hardwaresystems. Das Hardwaresystem umfasst eine Mehrzahl von Hardwarekomponenten, wobei jede der Hardwarekomponenten zumindest einen Prozessor, einen Speicher mit Konfigurationsdaten der jeweiligen Hardwarekomponente und eine Kommunikationsschnittstelle zum Kommunizieren mit ein oder mehreren der Hardwarekomponenten des Hardwaresystems umfasst. Die Speicher der Hardwarekomponenten umfassen ferner jeweils Programminstruktionen zum Ausführen eines Verfahren zum Steuern der Systemkonfiguration des Hardwaresystems. Ein Ausführen der Programminstruktionen durch die Prozessoren der Hardwarekomponenten steuert das Hardwaresystem so, dass es das Verfahren ausführt, welches umfasst:
- Erstellen und Senden einer ersten Änderungsanfrage zu einer ersten Änderung der Systemkonfiguration des Hardwaresystems durch eine erste Hardwarekomponente der Mehrzahl von Hardwarekomponenten,
- Empfangen der ersten Änderungsanfrage durch die weiteren Hardwarekomponenten der Mehrzahl von Hardwarekomponenten,
- Prüfen der ersten Änderungsanfrage durch die weiteren Hardwarekomponenten auf ihre Kompatibilität mit der Konfiguration der jeweiligen empfangenden Hardwarekomponente unter Verwendung der Konfigurationsdaten der empfangenden Hardwarekomponente,
- im Falle, dass die angefragte erste Änderung der Systemkonfiguration kompatible mit der Konfiguration der empfangenden Hardwarekomponente ist, Erzeugen und Senden einer Zustimmung zu der ersten Änderung der Systemkonfiguration durch die empfangende Hardwarekomponente, und
im Falle, dass ein für einen Konsens notwendiges Zustimmungsquorum der Hardwarekomponenten der Mehrzahl von Hardwarekomponenten erreicht wird:
- Eintragen der angefragten ersten Änderung der Systemkonfiguration des Hardwaresystems in die Blockchain,
- Implementieren der angefragten ersten Änderung der Systemkonfiguration in dem Hardwaresystem.

Nach Ausführungsformen ist das Hardwaresystem ferner zum Ausführen eines Verfahrens nach einer oder mehreren der zuvor beschriebenen Ausführungsformen konfiguriert.

Die Verwendung von Ordinalzahlen wie "erstes", "zweites", "drittes" etc. dient hierin, soweit sich aus dem konkreten Zusammenhang nicht eindeutig etwas anderes ergibt, allein der Unterscheidung voneinander verschiedener Elemente und soll keine bestimmte Reihen- oder Rangfolge implizieren.

Im Weiteren werden Ausführungsformen der Erfindung mit Bezugnahme auf die Zeichnungen näher erläutert. Es zeigen:
- Figur 1: ein Blockdiagramm einer Ausführungsform eines exemplarischen Hardwaresystems,
- Figur 2: ein Blockdiagramm einer Ausführungsform exemplarischer Hardwarekomponenten,
- Figur 3: ein Flussdiagramm einer Ausführungsform eines ersten exemplarischen Verfahrens zum Steuern des Hardwaresystems der Figur 1, und
- Figur 4: ein Flussdiagramm einer Ausführungsform eines zweiten exemplarischen Verfahrens zum Steuern des Hardwaresystems der Figur 1.

Elemente der nachfolgenden Ausführungsformen, die einander entsprechen, werden mit denselben Bezugszeichen gekennzeichnet.

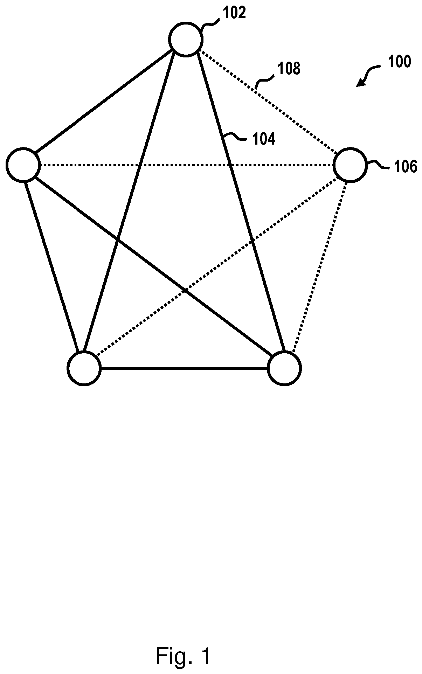

Figur 1 zeigt ein schematisches Blockdiagramm eines exemplarisches Hardwaresystems 100. Das Hardwaresystem 100 umfasst eine Mehrzahl von Hardwarekomponenten 102. Dem Hardwaresystem 100 ist eine Blockchain zugeordnet, in welche Änderungen der Systemkonfiguration des Hardwaresystems 100 eingetragen werden. Bei diesen Änderungen kann es sich beispielsweise um ein Hinzufügen einer zusätzlichen Hardwarekomponente 106 oder um ein Entfernen einer vorhandenen Hardwarekomponente 102 handeln. Ferner kann es sich bei den Änderungen beispielsweise um Änderungen von Kommunikationsprotokollen, kryptographischen Protokollen, Anwendung- oder Betriebsprogrammen handeln. Die einzelnen Hardwarekomponenten 102 des Hardwaresystems 100 kommunizieren über Kommunikationsverbindungen 104 miteinander. Bei diesen Kommunikationsverbindungen 104 kann es sich beispielsweise um kabellose oder kabelgebundene bzw. um kontaktbehaftete oder kontaktlose Kommunikationsverbindungen handeln. Nach Ausführungsformen bildet das Hardwaresystem 100 somit ein Netzwerk, welches beispielsweise ein vermaschte und/oder vollvermaschte Topologie aufweist.

Soll beispielsweise eine zusätzliche Hardwarekomponente 106 zu dem Hardwaresystem 100 hinzugefügt werden, schickt diese Hardwarekomponente 106 eine Änderungsanfrage zu einer Änderung der Systemkonfiguration des Hardwaresystems 100 an die weiteren Hardwarekomponenten 102, um die zusätzliche Hardwarekomponente 106 in die Systemkonfiguration zu integrieren. Dies kann beispielsweise über die Kommunikationsverbindungen 108 per Broadcast erfolgen. Die Änderungsanfrage wird in diesem Fall von der Hardwarekomponente 106 an alle weiteren Hardwarekomponenten 102 des Hardwaresystems 100 übertragen.

Ferner kann beispielsweise eine der bestehenden Hardwarekomponenten 102 des Hardwaresystems 100 modifiziert worden und/oder einen neuen Dienst anbieten. In diesem schickt beispielsweise die entsprechende Hardwarekomponente 102 eine Änderungsanfrage zu einer entsprechenden Änderung der Systemkonfiguration des Hardwaresystems 100 an die weiteren Hardwarekomponenten 102, um die Änderungen der bestehenden Hardwarekomponenten 102 in die Systemkonfiguration zu integrieren.

Bei dem Hardwaresystem 100 kann es sich beispielsweise um ein Peer-to-Peer-Netz handeln, bei welchem alle Hardwarekomponenten 102, 106 gleichberechtigt sind und sowohl Dienste in Anspruch nehmen, als auch zur Verfügung stellen können. Alternativ können Hardwarekomponenten 102, 106 des Hardwaresystems 100 auch in einer Client-Server-Beziehung zueinander stehen. Bei dieser bietet eine als Server fungierende Hardwarekomponenten 102, 106 einen Dienst an und ein las Client fungierende Hardwarekomponenten 102, 106 nutzt diesen Dienst. Im Falle einer Peer-to-Peer-Architektur ist jede Hardwarekomponenten 102, 106 des Hardwaresystems 100, welche von der Peer-to-Peer-Architektur umfasst wird, ein Peer, d.h. Gleichgestellter, und kann mithin einen Dienst gleichermaßen nutzen und selbst anbieten.

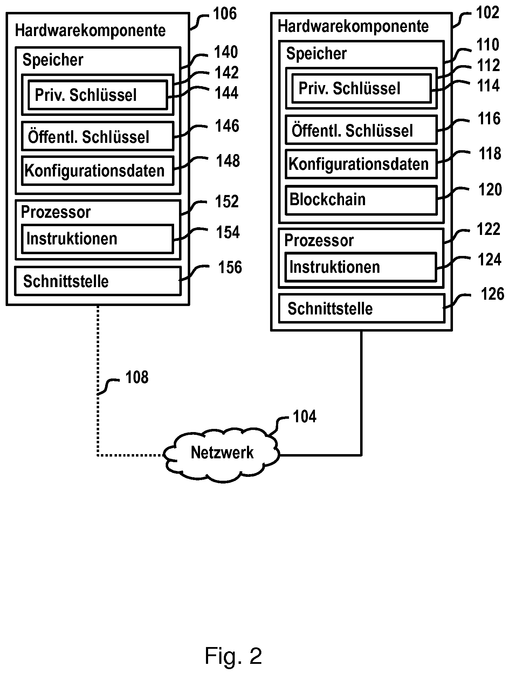

Figur 2 zeigt Ausführungsformen exemplarischer Hardwarekomponenten 102, 106. Die exemplarische Hardwarekomponente 102 des Hardwaresystems 100 umfasst einen Prozessor 122. Der Prozessor 122 ist dazu konfiguriert Programminstruktionen 124 auszuführen zum Steuern der Systemkonfiguration eines Hardwaresystems, welches die Hardwarekomponente 102 umfasst. Die Steuerung der Systemkonfiguration erfolgt unter Verwendung einer dem Hardwaresystem zugeordneten Blockchain 120. Die Blockchain 120 ist in einem Speicher 110 der Hardwarekomponente 102 gespeichert. Die Blockchain 120 umfasst Einträge mit Konfigurationsdaten des Hardwaresystems 100. Ferner sind in dem Speicher 110 Konfigurationsdaten 118 der Hardwarekomponente 102 gespeichert. Die Konfigurationsdaten 118 in beispielsweise in ein oder mehreren Konfigurationsdateien gespeichert. In einem geschützten Speicherbereich 112 des Speichers 110 ist nach Ausführungsformen ein privater Schlüssel 114 der Hardwarekomponente 102 gespeichert. Die Hardwarekomponente 102 prüft Änderungsanfragen zur Änderung der Systemkonfiguration beispielsweise anhand der Konfigurationsdaten 118 auf Kompatibilität mit ihrer Konfiguration. Im Falle, dass die angefragte Änderung der Systemkonfiguration gemäß den Konfigurationsdaten 118 kompatible mit der Konfiguration der Hardwarekomponente 102 ist, erzeugt die Hardwarekomponente 102 eine Zustimmung zu der Änderung und signiert diese beispielsweise mit dem privaten Schlüssel 114. Zudem kann in dem Speicher 110 ein dem privaten Schlüssel 114 zugeordneter öffentlicher kryptographischer Schlüssel 116 gespeichert sein, mit welchem Signaturen durch den privaten Schlüssel 114 geprüft werden können. Der öffentliche Schlüssel 116 kann auch von den weiteren Hardwarekomponenten des Hardwaresystems 100 umfasst sein, sodass die weiteren Hardwarekomponenten Signaturen der Hardwarekomponente 102 mit dem privaten Schlüssel 114 prüfen können. Alternativ oder zusätzlich kann auch die Blockchain 120 den öffentliche Schlüssel 116 umfassen. Somit kann jede Hardwarekomponente des Hardwaresystems 100, welche die Blockchain 120 umfasst Signaturen mit dem privaten Schlüssel 114 auf ihre Gültigkeit prüfen. Ebenso kann nach Ausführungsformen auch die Hardwarekomponente 102 öffentliche kryptographische Schlüssel der weiteren Hardwarekomponenten des Hardwaresystems 100 umfassen. Diese öffentlichen kryptographischen Schlüssel können beispielsweise in dem Speicher 110 gespeichert sein. Nach Ausführungsformen können sie von der Blockchain 120 umfasst sein. Ein Speichern der öffentlichen kryptographischen Schlüssel der in das Hardwaresystem integrierten Hardwarekomponenten ermöglicht es, dass unter Verwendung der Blockchain 120 Signaturen aller integrierten Hardwarekomponenten auf ihre Gültigkeit geprüft werden können.

Schließlich umfasst die Hardwarekomponente 102 eine Kommunikationsschnittstelle 126 zur Kommunikation mit den weiteren Hardwarekomponenten des Hardwaresystems 100. Zur Erhöhung der Sicherheit, insbesondere wenn es sich um ein sicherheitskritisches System handelt, erfolgt die Kommunikation mit den weiteren Hardwarekomponenten des Hardwaresystems 100 beispielsweis unter Verwendung einer Ende-zu-Ende-Verschlüsselung. Die Kommunikation erfolgt beispielsweise über ein Netzwerk 104. Bei dem Netzwerk 104 kann es sich um ein internes Netzwerk des Hardwaresystems 100 handeln. Mit anderen Worten kann es sich um ein Netzwerk handeln, welches durch einen Zusammenschluss der Hardwarekomponenten des Hardwaresystems, d.h. durch das Hardwaresystem selbst, gebildet wird und die Kommunikation der einzelnen Hardwarekomponenten untereinander ermöglicht. Nach weiteren Ausführungsformen kann es bei dem Netzwerk um ein privates Netzwerk, wie ein Intranet, oder ein öffentliches Netzwerk, wie das Internet handeln. In diesem Fall umfasst das Netzwerk 104 Komponenten bzw. wird von Komponenten gebildet, welche nicht Bestandteil des Hardwaresystems sind, d.h. deren Konfigurationen nicht in der Blockchain 120 protokolliert werden. Nach Ausführungsformen ist das Netzwerk 104 an ein weiteres privates oder öffentliches Netzwerk, wie etwa ein Intranet oder das Internet, angeschlossen bzw. mit diesem kommunikativ verbunden.

Bei der exemplarischen Hardwarekomponente 106 handelt es sich beispielsweise um eine zusätzliche Hardwarekomponente, welche zu dem Hardwaresystem 100 hinzugefügt werden soll. Die Hardwarekomponente 106 umfasst einen Prozessor 152. Der Prozessor 152 ist dazu konfiguriert Programminstruktionen 154 auszuführen zum Integrieren der Hardwarekomponente 106 in das Hardwaresystem 100. Die Hardwarekomponente 106 umfasst einen Speicher 140 mit Konfigurationsdaten 148. Ferner kann die Hardwarekomponente 106 in dem Speicher 140 einen öffentlichen kryptographischen Schlüssel 146 sowie einen geschützten Speicherbereich 142 mit einem dem öffentlichen Schlüssel 146 zugeordneten privaten kryptographischen Schlüssel 144 umfassen. Schließlich umfasst die Hardwarekomponente 106 eine Kommunikationsschnittstelle 156 zur Kommunikation mit den Hardwarekomponenten des Hardwaresystems 100, wie etwa der Hardwarekomponente 102.

Das Ausführen der Programminstruktionen 154 veranlasst den Prozessor 152 beispielsweise eine Änderungsanfrage zu erstellen und über das Netzwerk an die Hardwarekomponenten des Hardwaresystems 100, wie etwa Hardwarekomponente 102, zu schicken. Die Änderungsanfrage umfasst beispielsweise Konfigurationsdaten 148 und/oder den öffentlichen Schlüssel 146 der Hardwarekomponente 106. Die Hardwarekomponente 102 prüft die Änderungsanfrage, beispielsweise insbesondere die Konfigurationsdaten 148, auf ihre Kompatibilität mit der Konfiguration der Hardwarekomponente 102, beispielsweise unter Verwendung den eigenen Konfigurationsdaten 118. Ist die Hardwarekomponente 106 kompatibel mit der Hardwarekomponente 102, erzeugt und sendet die Hardwarekomponente 102 eine Zustimmung zu der Änderung. Die Zustimmung wird beispielsweise an eine für die Integration zusätzlicher Hardwarekomponenten vorgesehene Hardwarekomponente des Hardwaresystems 100 gesendet.

Wird ein für einen Konsens notwendiges Zustimmungsquorum einer Mehrzahl von Hardwarekomponenten des Hardwaresystems erreicht, trägt die zur Integration vorgesehene Hardwarekomponente die angefragte Änderung der Systemkonfiguration des Hardwaresystems 100 in die Blockchain 120 ein. Beispielsweise werden die Konfigurationsdaten 148 der Hardwarekomponente 106 in die Blockchain 120 eingetragen und/oder der öffentliche Schlüssel 146. Ferner wird die Änderung implementiert, d.h. die Hardwarekomponente 106 in das Hardwaresystem 100 aufgenommen. Hierzu wird beispielsweise eine entsprechende Nachricht an alle Hardwarekomponenten des Hardwaresystems 100 gesendet. Die Nachricht umfasst beispielsweise die zusätzlichen Einträge in die Blockchain 120 und/oder die Konfigurationsdaten 148 und/oder den öffentlichen Schlüssel 146. Somit kann jede der Hardwarekomponenten des Hardwaresystems 100, welche eine Kopie der Blockchain 120 umfasst, diese aktualisieren. Beispielsweise umfasst jede Hardwarekomponente des Hardwaresystems 100 eine Kopie der Blockchain 120. Ferner können die Hardwarekomponenten des Hardwaresystems 100 ihre Konfigurationen bzw. Konfigurationsdaten an die zusätzliche Hardwarekomponente 106 anpassen. Dies gilt insbesondere für Hardwarekomponenten, deren Konfiguration inkompatibel mit der zusätzliche Hardwarekomponente 106 ist. Eine Anpassung kann beispielsweise durch ein Softwareupdate oder eine Installation einer zusätzlichen Softwarekomponente erfolgen. Die geänderte Blockchain 120 wird beispielsweise auch an die zusätzliche Hardwarekomponente gesendet. Nach Ausführungsformen leitet die zur Integration vorgesehene Hardwarekomponente die Änderungsanfrage der Hardwarekomponente 106 an die weiteren Hardwarekomponenten des Hardwaresystems 100 weiter. Alternativ sendet die zur Integration vorgesehene Hardwarekomponente die Änderungsanfrage der Hardwarekomponente 106 nicht weiter, sondern erstellt unter Verwendung der Änderungsanfrage der Hardwarekomponente 106 eine zweite Änderungsanfrage, welche an weiteren Hardwarekomponenten des Hardwaresystems 100 gesendet wird. Die weitergeleitete Änderungsanfrage und/oder die zweite Änderungsanfrage wird beispielsweise durch die zur Integration vorgesehene Hardwarekomponente mit einem ihr zugeordneten privaten kryptographischen Schlüssel signiert.

Nach Ausführungsformen umfasst jede der Hardwarekomponenten des Hardwaresystems 100 eine Kopie der Blockchain 120. Ferner werden die Zustimmungen der einzelnen Hardwarekomponenten an alle Hardwarekomponenten des Hardwaresystems 100 gesendet bzw. weitergeleitet. Somit kann jede der Hardwarekomponenten selbstständig prüfen, ob ein für einen Konsens notwendiges Zustimmungsquorum erreicht wurde. Wurde das notwendige Zustimmungsquorum erreicht, kann jede Hardwarekomponente selbständig die angefragte Änderung der Systemkonfiguration des Hardwaresystems in die entsprechende Kopie der Blockchain 120 eintragen.

Eine Änderungsanfrage kann ferner eine Hardware- und/oder Softwareänderung einer in das Hardwaresystem 100 bereits integrierten Hardwarekomponente 102, wie etwa der Hardwarekomponente 102, umfassen. Beispielsweise ist für eine Nutzung der Hardware- und/oder Softwareänderung durch Hardwarekomponente 102 selbst und/oder durch eine oder mehrere weitere Hardwarekomponente des Hardwaresystems 100 eine Änderung der Systemkonfiguration des Hardwaresystems 100 notwendig. Eine Änderung der Systemkonfiguration des Hardwaresystems 100 kann beispielsweise Hardware- und/oder Softwareänderung einzelner und/oder aller Komponenten des Hardwaresystems umfassen. Eine entsprechende Änderungsanfrage wird dann beispielsweise durch die Hardwarekomponente 102 erstellt und an die weiteren Hardwarekomponenten des Hardwaresystems 100 geschickt. In Antwort auf die Änderungsanfrage erhält die Hardwarekomponente 102 beispielsweise Zustimmungen zu der Änderungsanfrage von allen Hardwarekomponenten, deren Konfigurationen mit der angefragten Änderung kompatibel sind. Anhand der erhaltenen Zustimmungen kann die Hardwarekomponente 102 prüfen, ob das für einen Konsens notwendige Zustimmungsquorum erreicht wurde. Wurde das notwendige Zustimmungsquorum erreicht, trägt die Hardwarekomponente 102 die Änderung in die Kopie der Blockchain 120 ein. Ferner können die Hardwarekomponenten des Hardwaresystems 100 ihre Konfigurationsdaten so ändern bzw. anpassen, dass die angefragte Änderung in dem Hardwaresystem implementiert wird. Dies kann eine Änderung bzw. Anpassung der Konfigurationsdaten umfassen, sodass die entsprechenden Hardwarekomponenten dazu konfiguriert werden die Hardware- und/oder Softwareänderung der anfragenden Hardwarekomponente 102 nutzen bzw. der Hardwarekomponente 102 eine Nutzung der entsprechenden Hardware- und/oder Softwareänderung ermöglichen. Das Ermöglichen kann beispielsweise ein Bereitstellen bestimmter Daten und/oder ein Ausführen bestimmter Funktionalitäten umfassen.

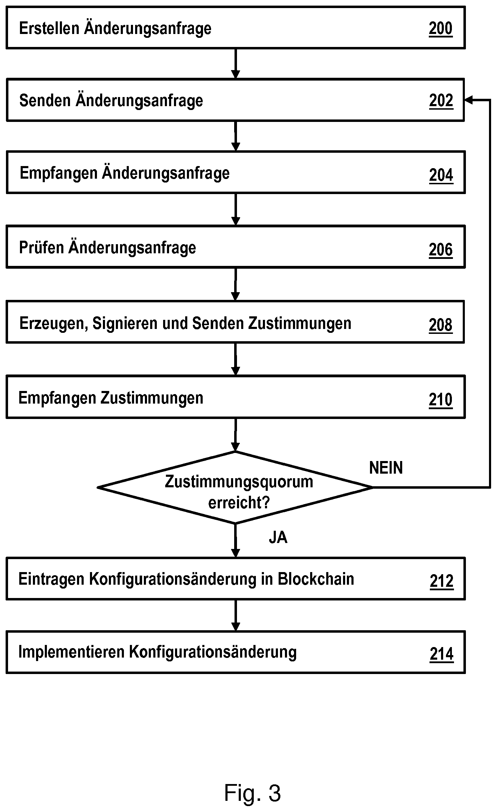

Figur 3 zeigt ein exemplarisches Verfahren zum Steuern einer Systemkonfiguration des Hardwaresystems der Figur 1 unter Verwendung einer dem Hardwaresystem zugeordneten Blockchain. In Schritt 200 wird eine Änderungsanfrage zu einer ersten Änderung der Systemkonfiguration des Hardwaresystems durch eine erste Hardwarekomponente erstellt. In Schritt 202 sendet die erste Hardwarekomponente die Änderungsanfrage an die weiteren Hardwarekomponenten des Hardwaresystems, welche die Änderungsanfrage in Schritt 204 empfangen. In Schritt 206 prüfen die weiteren Hardwarekomponenten die Änderungsanfrage auf ihre Kompatibilität mit der Konfiguration der jeweiligen empfangenden Hardwarekomponente. Hierzu verwenden die empfangenden Hardwarekomponenten beispielsweise ihre Konfigurationsdaten. Im Falle, dass die angefragte Änderung der Systemkonfiguration kompatible mit der Konfiguration der jeweiligen empfangenden Hardwarekomponente ist, erzeugt die entsprechende Hardwarekomponente in Schritt 208 eine Zustimmung zu der Änderung der Systemkonfiguration, signiert diese Zustimmung und sendet die signierte Zustimmung an die anfragende Hardwarekomponente. In Schritt 210 empfängt die anfragende Hardwarekomponente die Zustimmungen aller zustimmenden Hardwarekomponenten des Hardwaresystems. Im Falle, dass ein für einen Konsens notwendiges Zustimmungsquorum der Hardwarekomponenten des Hardwaresystems erreicht wird, wird das Verfahren in Schritt 212 fortgesetzt und die angefragte Konfigurationsänderung werden in die Blockchain eingetragen. In Schritt 214 wird die angefragte Konfigurationsänderung in dem Hardwaresystem implementiert. Die Schritte 212 und 214 können beispielsweise gleichzeitig ausgeführt werden. Das Implementieren der angefragten Konfigurationsänderung umfasst beispielsweise ein Anpassen der Konfigurationsdaten der Hardwarekomponenten an die Änderung der Systemkonfiguration des Hardwaresystems. Nach weiteren Ausführungsformen kann beispielsweise Schritte 212 vor Schritt 214 ausgeführt werden oder Schritt 214 vor Schritt 212.

Im Falle, dass ein für einen Konsens notwendiges Zustimmungsquorum der Hardwarekomponenten des Hardwaresystems nicht erreicht wird, wird das Verfahren in Schritt 202 fortgesetzt und die Änderungsanfrage auf eine Erfüllung eines vordefinierten Kriteriums hin erneut versendet. Das vordefinierte Kriterium kann beispielsweise den Ablauf einer vordefinierten Zeitspanne oder den Eintritt eines vordefinierten Ereignisses umfassen. Bei dem vordefinierten Ereignis kann es sich beispielsweise um die Implementierung einer weiteren Änderung der Systemkonfiguration, insbesondere um Konfigurationsänderungen einer oder mehrere der Hardwarekomponenten handeln.

Nach Ausführungsformen umfasst jede der Hardwarekomponenten des Hardwaresystems eine Kopie der Blockchain. Ferner erfolgt in diesem Fall das Senden der Zustimmungen in Schritt 208 nicht nur an die anfragende Hardwarekomponente, sondern an alle abstimmenden Hardwarekomponenten, an welche auch die Änderungsanfrage in Schritt 202 gesendet wird. Somit empfängt in Schritt 210 nicht nur die anfragende Hardwarekomponente die Zustimmungen, sondern jede der Hardwarekomponenten erhält alle anderen Zustimmungen, welche in Schritt 208 versendet wurden. Unter Verwendung der empfangenen Zustimmungen kann jede Hardwarekomponente eigenständig prüfen, ob ein für einen Konsens notwendiges Zustimmungsquorum erreicht wird. Falls die jeweilige Prüfung ergibt, dass das für notwendige Zustimmungsquorum erreicht ist, wird die Konfigurationsänderung in Schritt 212 in die Kopie der Blockchain eingetragen, welche die jeweilige prüfende Hardwarekomponente umfasst. Die Implementierung der Konfigurationsänderung in Schritt 214 umfasst in diesem Fall beispielsweise die selbstständige Anpassung der Konfigurationsdaten der jeweiligen prüfenden Hardwarekomponente gemäß den Vorgaben der Änderung der Systemkonfiguration des Hardwaresystems.

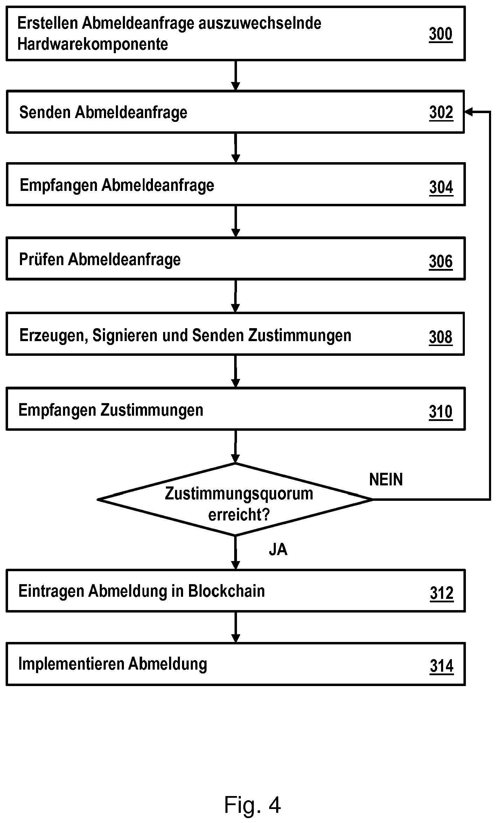

Figur 4 zeigt ein exemplarisches Verfahren zum Abmelden einer Hardwarekomponente aus einem Hardwaresystem, wie es beispielsweise in Figur 1 gezeigt ist, unter Verwendung einer dem Hardwaresystem zugeordneten Blockchain. In Schritt 300 wird eine Abmeldeanfrage zum Abmelden einer auszuwechselnden oder ersatzlos zu entfernenden Hardwarekomponente des Hardwaresystems erstellt. In Schritt 302 sendet die abzumeldende Hardwarekomponente die Abmeldeanfrage an die weiteren Hardwarekomponenten des Hardwaresystems, welche die Abmeldeanfrage in Schritt 304 empfangen. In Schritt 306 prüfen die weiteren Hardwarekomponenten die Abmeldeanfrage auf ihre Kompatibilität mit der Konfiguration der jeweiligen empfangenden Hardwarekomponente. Hierzu verwenden die empfangenden Hardwarekomponenten beispielsweise ihre Konfigurationsdaten. Im Falle, dass die angefragte Abmeldung kompatible mit der Konfiguration der jeweiligen empfangenden Hardwarekomponente ist, erzeugt die entsprechende Hardwarekomponente in Schritt 308 eine Zustimmung zu der Abmeldung, signiert diese Zustimmung und sendet die signierte Zustimmung an die anfragende Hardwarekomponente. Die Abmeldung ist mit der Konfiguration einer Hardwarekomponente beispielsweise kompatibel, falls die entsprechende Hardwarekomponente für ihre Funktionalität nicht auf die abzumeldende Hardwarekomponente angewiesen ist. Insbesondere kann dies der Fall sein, falls die entsprechende Hardwarekomponente nicht auf die abzumeldende Hardwarekomponente zurückgreift oder solche Zugriffe nicht wesentlich sind für die eine Aufrechterhaltung der Funktionalität der entsprechenden Hardwarekomponente. Ferner kann dies der Fall sein, falls das Hardwaresystem einen Ersatz für die abzumeldende Hardwarekomponente umfasst. In Schritt 310 empfängt die abzumeldende Hardwarekomponente die Zustimmungen aller zustimmenden Hardwarekomponenten des Hardwaresystems. Im Falle, dass ein für einen Konsens notwendiges Zustimmungsquorum der Hardwarekomponenten des Hardwaresystems erreicht wird, wird das Verfahren in Schritt 312 fortgesetzt und die Abmeldung der anfragenden Hardwarekomponente in die Blockchain eingetragen. In Schritt 314 wird die anfragende Hardwarekomponente von dem Hardwaresystem abgemeldet. Die Schritte 312 und 314 können beispielsweise gleichzeitig ausgeführt werden. Das Abmelden umfasst beispielsweise ein Anpassen der Konfigurationsdaten der Hardwarekomponenten an die Änderung der Systemkonfiguration des Hardwaresystems. Beispielsweise werden die Konfigurationen ein oder mehrerer der Hardwarekomponenten so angepasst, dass sie auf einen Ersatz für die abgemeldete Hardwarekomponente zugreifen oder entsprechende Zugriffe werden blockiert, falls diese nicht wesentlich für die Aufrechterhaltung der Funktionalität der entsprechenden Hardwarekomponenten sind. Nach dem Abmelden kann die abgemeldete Hardwarekomponente entfernt werden, ohne dass die Funktionsfähigkeit des verbleibenden Hardwaresystems gefährdet wird. So kann vielmehr sichergestellt werden, dass das Hardwaresystem weiterhin funktionsfähig bleibt. Nach weiteren Ausführungsformen kann beispielsweise Schritte 312 vor Schritt 314 ausgeführt werden oder Schritt 314 vor Schritt 312.

Im Falle, dass ein für einen Konsens notwendiges Zustimmungsquorum der Hardwarekomponenten des Hardwaresystems nicht erreicht wird, erfolgt zunächst keine Abmeldung der abzumeldenden Hardwarekomponente. Vielmehr bleibt die abzumeldende Hardwarekomponente Teil des Hardwaresystems und kommuniziert weiterhin mit anderen Hardwarekomponenten des Systems. Das Verfahren wird in Schritt 302 fortgesetzt und die Abmeldeanfrage auf eine Erfüllung eines vordefinierten Kriteriums hin erneut versendet. Das vordefinierte Kriterium kann beispielsweise den Ablauf einer vordefinierten Zeitspanne oder den Eintritt eines vordefinierten Ereignisses umfassen. Bei dem vordefinierten Ereignis kann es sich beispielsweise um die Implementierung einer Änderung der Systemkonfiguration, insbesondere um Konfigurationsänderungen einer oder mehrere der Hardwarekomponenten handeln. Ferner kann es sich bei dem vordefinierten Ereignis beispielsweise um ein erfolgreiches Hinzufügen einer Austauschkomponente. Wurde die Austauschkomponente gemäß dem Verfahren nach Figur 3 zu dem Hardwaresystem erfolgreich hinzugefügt, sodass die Hardwarekomponenten des Systems nun anstatt auf die abzumeldende Hardwarekomponente auf die hinzugefügte Hardwarekomponente zurückgreifen. Mithin kann die abzumeldende Hardwarekomponente nach Hinzufügen der Austauchkomponente entfernt werden, ohne dass die Funktionsfähigkeit des verbleibenden Hardwaresystems gefährdet wird.

Nach Ausführungsformen umfasst jede der Hardwarekomponenten des Hardwaresystems eine Kopie der Blockchain. Ferner erfolgt in diesem Fall das Senden der Zustimmungen in Schritt 308 nicht nur an die anfragende Hardwarekomponente, sondern an alle abstimmenden Hardwarekomponenten, an welche auch die Änderungsanfrage in Schritt 302 gesendet wird. Somit empfängt in Schritt 310 nicht nur die anfragende Hardwarekomponente die Zustimmungen, sondern jede der Hardwarekomponenten erhält alle anderen Zustimmungen, welche in Schritt 308 versendet wurden. Unter Verwendung der empfangenen Zustimmungen kann jede Hardwarekomponente eigenständig prüfen, ob ein für einen Konsens notwendiges Zustimmungsquorum erreicht wird. Falls die jeweilige Prüfung ergibt, dass das für notwendige Zustimmungsquorum erreicht ist, wird die Abmeldung in Schritt 312 in die Kopie der Blockchain eingetragen, welche die jeweilige prüfende Hardwarekomponente umfasst. Die Implementierung der Konfigurationsänderung in Schritt 314 umfasst in diesem Fall beispielsweise die selbstständige Anpassung der Konfigurationsdaten der jeweiligen prüfenden Hardwarekomponente, sodass die abzumeldende Hardwarekomponente sicher entfernt werden kann. Beispielsweise werden Zugriffe auf die abzumeldende Hardwarekomponente gesperrt und/oder durch Zugriffe auf eine oder mehrere andere Hardwarekomponenten ersetzt.

### Bezugszeichenliste

- 100: Hardwaresystem
- 102: Hardwarekomponente
- 104: Netzwerk
- 106: Hardwarekomponente
- 108: Kommunikationsverbindung
- 110: Speicher
- 112: geschützter Speicherbereich
- 114: privater kryptographischer Schlüssel
- 116: öffentlicher kryptographischer Schlüssel
- 118: Konfigurationsdaten
- 120: Blockchain
- 122: Prozessor
- 124: Programminstruktionen
- 126: Kommunikationsschnittstelle
- 140: Speicher
- 142: geschützter Speicherbereich
- 144: privater kryptographischer Schlüssel
- 146: öffentlicher kryptographischer Schlüssel
- 148: Konfigurationsdaten
- 152: Prozessor
- 154: Programminstruktionen
- 156: Kommunikationsschnittstelle

## Patentansprüche

1. Verfahren zum Steuern einer Systemkonfiguration eines Hardwaresystems (100) unter Verwendung einer dem Hardwaresystem (100) zugeordneten Blockchain (120), wobei die Blockchain (120) Einträge mit Konfigurationsdaten des Hardwaresystems (100) umfasst, wobei das Hardwaresystem (100) eine Mehrzahl von Hardwarekomponenten (102, 106) umfasst, wobei jede der Hardwarekomponenten (102, 106) zumindest einen Prozessor (122, 152), einen Speicher (110, 140) mit Konfigurationsdaten (118, 148) der jeweiligen Hardwarekomponente (102, 106) und eine Kommunikationsschnittstelle (126, 156) zum Kommunizieren mit ein oder mehreren der Hardwarekomponenten (102, 106) des Hardwaresystems (100) umfasst,
wobei das Verfahren umfasst:
• Erstellen und Senden einer ersten Änderungsanfrage zu einer ersten Änderung der Systemkonfiguration des Hardwaresystems (100) durch eine erste Hardwarekomponente (106) der Mehrzahl von Hardwarekomponenten (102, 106),
• Empfangen der ersten Änderungsanfrage durch die weiteren Hardwarekomponenten (102) der Mehrzahl von Hardwarekomponenten (102, 106),
• Prüfen der ersten Änderungsanfrage durch die weiteren Hardwarekomponenten (102) auf ihre Kompatibilität mit der Konfiguration der jeweiligen empfangenden Hardwarekomponente (102) unter Verwendung der Konfigurationsdaten (118) der empfangenden Hardwarekomponente (102),
• im Falle, dass die angefragte erste Änderung der Systemkonfiguration kompatible mit der Konfiguration der empfangenden Hardwarekomponente (102) ist, Erzeugen und Senden einer Zustimmung zu der ersten Änderung der Systemkonfiguration durch die empfangende Hardwarekomponente (102), und
im Falle, dass ein für einen Konsens notwendiges Zustimmungsquorum der Hardwarekomponenten (102, 106) der Mehrzahl von Hardwarekomponenten erreicht wird:
• Eintragen der angefragten ersten Änderung der Systemkonfiguration des Hardwaresystems (100) in die Blockchain (120),
• Implementieren der angefragten ersten Änderung der Systemkonfiguration in dem Hardwaresystem (100).

2. Verfahren nach Anspruch 1, wobei das für einen Konsens notwendige Zustimmungsquorum erfordert, dass die Anzahl der Zustimmungen der Hardwarekomponenten (102, 106) der Mehrzahl von Hardwarekomponenten einen vordefinierten Schwellenwert überschreitet.

3. Verfahren nach Anspruch 2, wobei der Schwellenwert abhängig von der Art der angefragten ersten Änderung der Systemkonfiguration ist und/oder
wobei den einzelnen Hardwarekomponenten (102) jeweils ein Gewichtungsfaktor zugeordnet ist und die Anzahl der Zustimmungen der Hardwarekomponenten (102) als gewichtete Summe unter Berücksichtigung der Gewichtungsfaktoren der zustimmenden Hardwarekomponenten (102) bestimmt wird.

4. Verfahren nach einem der vorangehenden Ansprüche, wobei die Mehrzahl von Hardwarekomponenten (102, 106) zumindest eine Hardwarekomponente umfassen, deren Zustimmung für die Eintragung der angefragten ersten Änderung der Systemkonfiguration des Hardwaresystems (100) in die Blockchain (120) obligatorisch ist, und wobei das für einen Konsens notwendige Zustimmungsquorum eine Zustimmung der zumindest einen obligatorischen Hardwarekomponente erfordert,
wobei das für einen Konsens notwendige Zustimmungsquorum insbesondere eine Zustimmung aller Hardwarekomponenten (102, 106) der Mehrzahl von Hardwarekomponenten erfordert.

5. Verfahren nach einem der vorangehenden Ansprüche, wobei die Speicher (110, 140) der Hardwarekomponenten (102, 106) jeweils einen geschützten Speicherbereich (112, 142) umfassen, in welchem ein privater kryptographischer Schlüssel (114, 144) eines der jeweiligen Hardwarekomponente zugeordneten asymmetrischen Schlüsselpaars gespeichert ist, wobei das Verfahren ferner umfasst:
Signieren der einzelnen Zustimmungen durch die jeweilige erzeugende Hardwarekomponente (102) unter Verwendung des in dem geschützten Speicherbereich (142) der erzeugenden Hardwarekomponente (102) gespeicherten privaten kryptographischen Schlüssels (114), und/oder
wobei das Eintragen der angefragten ersten Änderung in die Blockchain (120) eine notwendige Voraussetzung für das Implementieren der angefragten ersten Änderung der Systemkonfiguration in dem Hardwaresystem (100) ist.

6. Verfahren nach einem der vorangehenden Ansprüche, wobei das Implementieren der angefragten ersten Änderung der Systemkonfiguration in dem Hardwaresystem (100) eine Änderung der Konfigurationsdaten (118, 148) ein oder mehrerer der Hardwarekomponenten (102, 106) der Mehrzahl von Hardwarekomponenten umfasst.

7. Verfahren nach einem der vorangehenden Ansprüche, wobei das Verfahren im Falle, dass das für den Konsens notwendige Zustimmungsquorum nicht erreicht wird, ferner umfasst:
Erneutes Senden der ersten Änderungsanfrage durch die anfragende erste Hardwarekomponente (106).

8. Verfahren nach Anspruch 7, wobei die anfragende erste Hardwarekomponente (106) die erste Änderungsanfrage nach Ablauf einer vordefinierten Zeitspanne erneut sendet und/oder
wobei die anfragende erste Hardwarekomponente (106) die erste Änderungsanfrage wiederholt sendet bis das für einen Konsens notwendige Zustimmungsquorum erreicht wird.

9. Verfahren nach einem der vorangehenden Ansprüche, wobei die angefragte Änderung der Systemkonfiguration des Hardwaresystems (100) ein Hinzufügen, Entfernen und/oder Ändern eines durch zumindest eine Hardwarekomponente (102, 106) der Mehrzahl von Hardwarekomponenten bereitgestellten Dienst umfasst.

10. Verfahren nach Anspruch 9, wobei der Dienst von allen Hardwarekomponenten (102, 106) der Mehrzahl von Hardwarekomponenten bereitgestellt wird.

11. Verfahren nach einem der Ansprüche 9 bis 10, wobei der Dienst ein Bereitstellen einer Softwareressource und/oder einer Hardwareressource umfasst und/oder
wobei das Erzeugen und Senden der ersten Änderungsanfrage durch die anfragende erste Hardwarekomponente (106) auf eine Konfigurationsänderung der anfragenden ersten Hardwarekomponente (106) hin erfolgt.

12. Verfahren nach einem der Ansprüche 9 bis 11, wobei es sich bei der anfragenden ersten Hardwarekomponente (106) um eine in das Hardwaresystem (100) zu integrierende Hardwarekomponente (106) handelt und die angefragte erste Änderung der Systemkonfiguration ein Anmelden der zu integrierenden ersten Hardwarekomponente (106) sowie deren Integration in das Hardwaresystem (100) umfasst.

13. Verfahren nach einem der Ansprüche 9 bis 11, wobei die anfragende erste Hardwarekomponente (106) als Ersatz für eine auszuwechselnde zweite Hardwarekomponente in das Hardwaresystem (100) zu integrieren ist und die angefragte erste Änderung der Systemkonfiguration ein Abmelden der auszuwechselnden zweiten Hardwarekomponente von dem Hardwaresystem (100) umfasst.

14. Verfahren nach Anspruch 13, wobei die anfragende erste Hardwarekomponente (106) als Ersatz für eine auszuwechselnde zweite Hardwarekomponente in das Hardwaresystem (100) zu integrieren ist, wobei das Verfahren ferner umfasst:
• Erstellen und Senden einer zweiten Änderungsanfrage zu einer dritten Änderung der Systemkonfiguration des Hardwaresystems (100) durch die auszuwechselnde zweite Hardwarekomponente, wobei die dritte Änderung der Systemkonfiguration ein Abmelden der auszuwechselnden zweiten Hardwarekomponente von dem Hardwaresystem (100) umfasst,
• Empfangen der zweiten Änderungsanfrage durch die weiteren Hardwarekomponenten (102) der Mehrzahl von Hardwarekomponenten (102, 106),
• Prüfen der zweiten Änderungsanfrage durch die weiteren Hardwarekomponenten (102) auf ihre Kompatibilität mit der Konfiguration der jeweiligen empfangenden Hardwarekomponente (102) unter Verwendung der Konfigurationsdaten (118) der empfangenden Hardwarekomponente (102),
• im Falle, dass die angefragte dritte Änderung der Systemkonfiguration kompatible mit der Konfiguration der prüfenden Hardwarekomponente (102) ist, Erzeugen und Senden einer Zustimmung zu der dritten Änderung der Systemkonfiguration durch die entsprechende Hardwarekomponente (102),
• im Falle, dass ein für einen Konsens notwendiges zweites Zustimmungsquorum der Hardwarekomponenten (102, 106) der Mehrzahl von Hardwarekomponenten erreicht wird, Eintragen der angefragten dritten Änderung der Systemkonfiguration des Hardwaresystems (100) in die Blockchain (120),
• Abmelden der auszuwechselnden zweiten Hardwarekomponente von dem Hardwaresystem (100).

15. Hardwaresystem (100), welchem eine Blockchain (120) zum Steuern einer Systemkonfiguration des Hardwaresystems (100) zugeordnet ist, wobei die Blockchain (120) Einträge mit Konfigurationsdaten des Hardwaresystems (100) umfasst, wobei das Hardwaresystem (100) eine Mehrzahl von Hardwarekomponenten (102, 106) umfasst, wobei jede der Hardwarekomponenten (102, 106) zumindest einen Prozessor (122, 152), einen Speicher (110, 140) mit Konfigurationsdaten (118, 148) der jeweiligen Hardwarekomponente (102, 106) und eine Kommunikationsschnittstelle (126, 156) zum Kommunizieren mit ein oder mehreren der Hardwarekomponenten (102, 106) des Hardwaresystems (100) umfasst,
wobei die Speicher (110, 140) der Hardwarekomponenten (102, 106) ferner jeweils Programminstruktionen (124, 154) zum Ausführen eines Verfahrens zum Steuern der Systemkonfiguration des Hardwaresystems (100) umfassen, wobei ein Ausführen der Programminstruktionen (124, 154) durch die Prozessoren (122, 152) der Hardwarekomponenten (102, 106) das Hardwaresystem (100) so steuert, dass es das Verfahren ausführt, wobei das Verfahren umfasst:
• Erstellen und Senden einer ersten Änderungsanfrage zu einer ersten Änderung der Systemkonfiguration des Hardwaresystems (100) durch eine erste Hardwarekomponente (106) der Mehrzahl von Hardwarekomponenten (102, 106),
• Empfangen der ersten Änderungsanfrage durch die weiteren Hardwarekomponenten (102) der Mehrzahl von Hardwarekomponenten (102, 106),
• Prüfen der ersten Änderungsanfrage durch die weiteren Hardwarekomponenten (102) auf ihre Kompatibilität mit der Konfiguration der jeweiligen empfangenden Hardwarekomponente (102) unter Verwendung der Konfigurationsdaten (118) der empfangenden Hardwarekomponente (102),
• im Falle, dass die angefragte erste Änderung der Systemkonfiguration kompatible mit der Konfiguration der empfangenden Hardwarekomponente (102) ist, Erzeugen und Senden einer Zustimmung zu der ersten Änderung der Systemkonfiguration durch die empfangende Hardwarekomponente (102), und
im Falle, dass ein für einen Konsens notwendiges Zustimmungsquorum der Hardwarekomponenten (102, 106) der Mehrzahl von Hardwarekomponenten erreicht wird:
• Eintragen der angefragten ersten Änderung der Systemkonfiguration des Hardwaresystems (100) in die Blockchain (120),
• Implementieren der angefragten ersten Änderung der Systemkonfiguration in dem Hardwaresystem (100).

## Claims

1. A method for controlling a system configuration of a hardware system (100) by using a blockchain (120) associated with the hardware system (100), wherein the blockchain (120) comprises entries with configuration data of the hardware system (100), wherein the hardware system (100) comprises a plurality of hardware components (102, 106), wherein each of the hardware components (102, 106) comprises at least one processor (122, 152), a memory (110, 140) with configuration data (118, 148) for the particular hardware component (102, 106), and a communication interface (126, 156) for communicating with one or more of the hardware components (102, 106) of the hardware system (100),
wherein the method comprises the steps of:
• creating and sending a first change request for a first change to the system configuration of the hardware system (100) by means of a first hardware component (106) of the plurality of hardware components (102, 106),
• receiving the first change request by means of the further hardware components (102) of the plurality of hardware components (102, 106),
• checking the first change request by means of the further hardware components (102) for compatibility of the change request with the configuration of the particular receiving hardware component (102) by using configuration data (118) of the receiving hardware component (102),
• in the case that the requested first change to the system configuration is compatible with the configuration of the receiving hardware component (102), generating and sending an approval of the first change to the system configuration by means of the receiving hardware component (102), and
in the case that an approval quorum of the hardware components (102, 106) of the plurality of hardware components that is necessary for consent is achieved:
• entering the requested first change to the system configuration of the hardware system (100) into the blockchain (120),
• implementing the requested first change to the system configuration in the hardware system (100).

2. The method according to claim 1, wherein the approval quorum that is necessary for a consensus requires that the number of approvals of the hardware components (102, 106) of the plurality of hardware components exceeds a predefined threshold value.

3. The method according to claim 2, wherein the threshold value is dependent on the type of requested first change to the system configuration, and/or
wherein the individual hardware components (102) are each associated with a weighting factor and the number of approvals of the hardware components (102) is determined as weighted sum under consideration of the weighting factors of the approving hardware components (102).

4. The method according to one of the preceding claims, wherein the plurality of hardware components (102, 106) comprise at least one hardware component whose approval is obligatory for the entering of the requested first change to the system configuration of the hardware system (100) in the blockchain (120), and wherein the approval quorum that is necessary for a consensus requires an approval of the at least one obligatory hardware component,
wherein the approval quorum that is necessary for a consensus requires in particular an approval of all hardware components (102, 106) of the plurality of hardware components.

5. The method according to one of the preceding claims, wherein the memories (110, 140) of the hardware components (102, 106) each comprise a protected memory area (112, 142), in which there is stored a private cryptographic key (114, 144) of an asymmetric key pair associated with the particular hardware component, wherein the method also comprises the step of:
signing the individual approvals by the particular generating hardware component (102) with use of the private cryptographic key (114) stored in the protected memory area (142) of the generating hardware component (102), and/or
wherein the entering of the requested first change in the blockchain (120) is a necessary precondition for the implementation of the requested first change to the system configuration in the hardware system (100).

6. The method according to one of the preceding claims, wherein the implementation of the requested first change to the system configuration in the hardware system (100) comprises a change to the configuration data (118, 148) of one or more of the hardware components (102, 106) of the plurality of hardware components.

7. The method according to one of the preceding claims, wherein the method, in the event that the approval quorum that is necessary for the consensus is not achieved, also comprises:
re-sending the first change request by means of the requesting first hardware component (106).

8. The method according to claim 7, wherein the requesting first hardware component (106) re-sends the first change request once a predefined period of time has passed, and/or
wherein the requesting first hardware component (106) re-sends the first change request repeatedly until the approval quorum that is necessary for a consensus is achieved.

9. The method according to one of the preceding claims, wherein the requested change to the system configuration of the hardware system (100) comprises an addition, removal and/or change of a service provided by at least one hardware component (102, 106) of the plurality of hardware components.

10. The method according to claim 9, wherein the service is provided by all hardware components (102, 106) of the plurality of hardware components.

11. The method according to one of claims 9 to 10, wherein the service comprises providing a software resource and/or a hardware resource, and/or
wherein the first change request is generated and sent by the requesting first hardware component (106) following a configuration change to the requesting first hardware component (106).

12. The method according to one of claims 9 to 11, wherein the requesting first hardware component (106) is a hardware component (106) to be integrated in the hardware system (100) and the requested first change to the system configuration comprises a logon of the first hardware component (106) to be integrated as well as integration thereof into the hardware system (100).

13. The method according to one of claims 9 to 11, wherein the requesting first hardware component (106) is to be integrated into the hardware system (100) as replacement for a second hardware component that is to be replaced, and the requested first change to the system configuration comprises a logoff from the hardware system (100) of the second hardware component that is to be replaced.

14. The method according to claim 13, wherein the requesting first hardware component (106) is to be integrated into the hardware system (100) as a replacement for a second hardware component that is to be replaced, wherein the method also comprises:
• creating and sending a second change request for a third change to the system configuration of the hardware system (100) by means of the second hardware component that is to be replaced, wherein the third change to the system configuration comprises a logoff from the hardware system (100) of the second hardware component that is to be replaced,
• receiving the second change request by means of the further hardware components (102) of the plurality of hardware components (102, 106),
• checking the second change request by means of the further hardware components (102) for compatibility of the change request with the configuration of the particular receiving hardware component (102) by using configuration data (118) of the receiving hardware component (102),
• in the case that the requested third change to the system configuration is compatible with the configuration of the checking hardware component (102), generating and sending an approval of the third change to the system configuration by means of the corresponding hardware component (102), and
• in the case that a second approval quorum of the hardware components (102, 106) of the plurality of hardware components that is necessary for a consensus is achieved, entering the requested third change to the system configuration of the hardware system (100) into the blockchain (120),
• logging off the second hardware component that is to be replaced from the hardware system (100).

15. A hardware system (100) which is associated with a blockchain (120) for controlling a system configuration of the hardware system (100), wherein the blockchain (120) comprises entries with configuration data of the hardware system (100), wherein the hardware system (100) comprises a plurality of hardware components (102, 106), wherein each of the hardware components (102, 106) comprises at least one processor (122, 152), a memory (110, 140) with configuration data (118, 148) of the particular hardware component (102, 106) and a communication interface (126, 156) for communicating with one or more of the hardware components (102, 106) of the hardware system (100),
wherein the memories (110, 140) of the hardware components (102, 106) also each comprise program instructions (124, 154) for executing a method for controlling the system configuration of the hardware system (100), wherein an execution of the program instructions (124, 154) by the processors (122, 152) of the hardware components (102, 106) controls the hardware system (100) such that it executes the method, wherein the method comprises the steps of:
• creating and sending a first change request for a first change to the system configuration of the hardware system (100) by means of a first hardware component (106) of the plurality of hardware components (102, 106),
• receiving the first change request by means of the further hardware components (102) of the plurality of hardware components (102, 106),
• checking the first change request by means of the further hardware components (102) for compatibility of the change request with the configuration of the particular receiving hardware component (102) by using configuration data (118) of the receiving hardware component (102),
• in the case that the requested first change to the system configuration is compatible with the configuration of the receiving hardware component (102), generating and sending an approval of the first change to the system configuration by means of the receiving hardware component (102), and
in the case that an approval quorum of the hardware components (102, 106) of the plurality of hardware components that is necessary for consent is achieved:
• entering the requested first change to the system configuration of the hardware system (100) into the blockchain (120),
• implementing the requested first change to the system configuration in the hardware system (100).

## Revendications

1. Procédé de commande d'une configuration de système d'un système matériel (100) moyennant l'emploi d'une chaîne de blocs (120) associée au système matériel (100), dans lequel la chaîne de blocs (120) comprend des entrées avec des données de configuration du système matériel (100), dans lequel le système matériel (100) comprend une multiplicité de composants matériels (102, 106), dans lequel chacun des composants matériels (102, 106) comprend au moins un processeur (122, 152), une mémoire (110, 140) avec des données de configuration (118, 148) du composant matériel (102, 106) respectif et une interface de communication (126, 156) pour la communication avec un ou plusieurs des composants matériels (102, 106) du système matériel (100),
le procédé comprenant :
• l'établissement et l'envoi d'une première demande de modification pour une première modification de la configuration de système du système matériel (100) par un premier composant matériel (106) de la multiplicité des composants matériels (102, 106),
• la réception de la première demande de modification par les autres composants matériels (102) de la multiplicité de composants matériels (102, 106),
• la vérification de la première demande de modification par les autres composants matériels (102) en ce qui concerne leur compatibilité avec la configuration des composants matériels (102) reçus respectifs moyennant l'emploi des données de configuration (118) du composant matériel (102) reçu,
• dans le cas où la première modification demandée de la configuration de système est compatible avec la configuration du composant matériel (102) reçu, la création et l'envoi d'une acceptation pour la première modification de la configuration de système par le composant matériel (102) reçu, et
dans le cas où un quota d'acceptation des composants matériels (102, 106) de la multiplicité de composants matériels nécessaire pour un consensus est atteint :
• l'entrée de la première modification demandée de la configuration de système du système matériel (100) dans la chaîne de blocs (120),
• la mise en œuvre de la première modification demandée de la configuration de système dans le système matériel (100).

2. Procédé selon la revendication 1, dans lequel le quota d'acceptation nécessaire pour un consensus nécessite que le nombre d'acceptations des composants matériels (102, 106) de la multiplicité de composants matériels dépasse une valeur de seuil prédéfinie.

3. Procédé selon la revendication 2, dans lequel la valeur de seuil est dépendante du type de la première modification de la configuration de système demandée et/ou
dans lequel les composants matériels (102) individuels sont respectivement associés à un facteur de pondération et le nombre d'acceptations des composants matériels (102) est déterminé sous forme de somme pondérée en tenant compte des facteurs de pondération des composants matériels (102) acceptants.

4. Procédé selon l'une des revendications précédentes, dans lequel la multiplicité de composants matériels (102, 106) comprend au moins un composant matériel dont l'acceptation pour la saisie de la première modification demandée de la configuration de système du système matériel (100) dans la chaîne de blocs (120) est obligatoire et dans lequel le quota d'acceptation nécessaire pour un consensus nécessite une acceptation de l'au moins un composant matériel obligatoire,
dans lequel le quota d'acceptation nécessaire pour un consensus nécessite une acceptation de tous les composants matériels (102, 106) de la multiplicité de composants matériels.

5. Procédé selon l'une des revendications précédentes, dans lequel les mémoires (110, 140) des composants matériels (102, 106) comprennent respectivement une zone de mémoire protégée (112, 142) dans laquelle une clé cryptographique privée (114, 144) d'une paire de clés asymétrique associée au composant matériel respectif est stockée, où le procédé comprend en outre :
la signature des acceptations individuelles par le composant matériel (102) créé respectif moyennant l'emploi de la clé cryptographique privée (114) stockée dans la zone de mémoire (142) du composant matériel (102) créé, et/ou
dans lequel l'entrée de la première modification demandée dans la chaîne de blocs (120) est une condition nécessaire pour la mise en œuvre de la première modification demandée de la configuration de système dans le système matériel (100).

6. Procédé selon l'une des revendications précédentes, dans lequel la mise en œuvre de la première modification demandée de la configuration de système dans le système matériel (100) comprend une modification des données de configuration (118, 148) d'un ou de plusieurs composants matériels (102, 106) de la multiplicité de composants matériel.

7. Procédé selon l'une des revendications précédentes, où le procédé, dans le cas où le quota d'acceptation nécessaire pour le consensus n'est pas atteint, comprend en outre :
un nouvel envoi de la première demande de modification par le premier composant matériel (106) demandeur.

8. Procédé selon la revendication 7, dans lequel le premier composant matériel (106) demandeur envoie de nouveau la première demande de modification après l'écoulement d'un intervalle de temps prédéfini, et/ou
dans lequel le premier composant matériel (106) demandeur envoie la première demande de modification de manière répétée jusqu'à ce que le quota d'acceptation nécessaire pour un consensus soit atteint.

9. Procédé selon l'une des revendications précédentes, dans lequel la modification demandée de la configuration de système du système matériel (100) comprend un ajout, un retrait et/ou une modification d'un service fourni par au moins un composant matériel (102, 106) de la multiplicité de composants matériel.

10. Procédé selon la revendication 9, dans lequel le service est fourni par tous les composants matériels (102, 106) de la multiplicité de composants matériel.

11. Procédé selon l'une des revendications 9 à 10, dans lequel le service comprend une fourniture d'une source logicielle et/ou d'une source matérielle, et/ou
dans lequel la création et l'envoi de la première demande de modification par le premier composant matériel (106) demandeur a lieu suite à une modification de configuration du premier composant matériel (106) demandeur.

12. Procédé selon l'une des revendications 9 à 11, dans lequel, dans le cas du premier composant matériel (106) demandeur, il s'agit d'un composant matériel (106) à intégrer dans le système matériel (100) et la première modification demandée comprend un enregistrement du premier composant matériel (106) à intégrer ainsi que son intégration dans le système matériel (100).

13. Procédé selon l'une des revendications 9 à 11, dans lequel le premier composant matériel (106) demandeur est à intégrer en tant que remplaçant pour un deuxième composant matériel à échanger dans le système matériel (100) et la première modification demandée de la configuration de système comprend une annulation du deuxième composant matériel à échanger du système matériel (100).

14. Procédé selon la revendication 13, dans lequel le premier composant matériel (106) demandeur est à intégrer en tant que remplaçant pour un deuxième composant matériel à échanger dans le système matériel (100), où le procédé comprend en outre :
• l'établissement et l'envoi d'une deuxième demande de modification pour une troisième modification de la configuration de système du système matériel (100) par le deuxième composant matériel à échanger, où la troisième modification de la configuration de système comprend une annulation du deuxième composant matériel à échanger dans le système matériel (100),
• la réception de la deuxième demande de modification par les autres composants matériels (102) de la multiplicité de composants matériels (102, 106),
• la vérification de la deuxième demande de modification par les autres composants matériels (102) en ce qui concerne leur compatibilité avec la configuration des composants matériels (102) reçus respectifs moyennant l'emploi des données de configuration (118) du composant matériel (102) récepteur,
• dans le cas où la troisième modification demandée de la configuration de système est compatible avec la configuration du composant matériel (102) à vérifier, la création et l'envoi d'une acceptation pour la troisième modification de la configuration de système par le composant matériel (102) correspondant,
• dans le cas où un quota d'acceptation des composants matériels (102, 106) de la multiplicité de composants matériels nécessaire pour un consensus est atteint, l'entrée de la troisième modification demandée de la configuration de système du système matériel (100) dans la chaîne de blocs (120),
• l'annulation de l'enregistrement du deuxième composant matériel à échanger du système matériel (100).

15. Système matériel (100) auquel est associée une chaîne de blocs (120) pour la commande d'une configuration de système du système matériel (100), dans lequel la chaîne de blocs (120) comprend des entrées avec des données de configuration du système matériel (100), dans lequel le système matériel (100) comprend une multiplicité de composants matériels (102, 106), dans lequel chacun des composants matériels (102, 106) comprend au moins un processeur (122, 152), une mémoire (110, 140) avec des données de configuration (118, 148) du composant matériel (102, 106) respectif et une interface de communication (126, 156) pour la communication avec un ou plusieurs des composants matériels (102, 106) du système matériel (100),
dans lequel les mémoires (110, 140) des composants matériels (102, 106) comprennent en outre respectivement des instructions de programme (124, 154) pour l'exécution d'un procédé de commande de la configuration de système du système matériel (100), où une exécution des instructions de programme (124, 154) par les processeurs (122, 152) des composants matériels ((102, 106) fait en sorte que le système matériel (100) exécute le procédé, le procédé comprenant :
• l'établissement et l'envoi d'une première demande de modification pour une première modification de la configuration de système du système matériel (100) par un premier composant matériel (106) de la multiplicité de composants matériels (102, 106),
• la réception de la première demande de modification par les autres composants matériels (102) de la multiplicité de composants matériels (102, 106),
• la vérification de la première demande de modification par les autres composants matériels (102) en ce qui concerne leur compatibilité avec la configuration des composants matériels (102) reçus respectifs moyennant l'emploi des données de configuration (118) du composant matériel (102) reçu,
• dans le cas où la première modification demandée de la configuration de système est compatible avec la configuration du composant matériel (102) reçu, la création et l'envoi d'une acceptation pour la première modification de la configuration de système par le composant matériel (102) reçu, et
dans le cas où un quota d'acceptation des composants matériels (102, 106) de la multiplicité de composants matériels nécessaire pour un consensus est atteint :
• l'entrée de la première modification demandée de la configuration de système du système matériel (100) dans la chaîne de blocs (120),
• la mise en œuvre de la première modification demandée de la configuration de système dans le système matériel (100).
